# EUROPÄISCHE PATENTANMELDUNG

(11) **EP 1 852 146 A1**
(43) Veröffentlichungstag der Anmeldung: **07.11.2007**
(21) Anmeldenummer: 06450066.3
(22) Anmeldetag: 03.05.2006
(51) Int. Cl.: A62C 2/06

(54) **Brandschutz-Einrichtung, insbesondere für Be- und Entlüftungssysteme**

(71) Anmelder: Kamleithner-Maly, Uta, 2540 Bad Vöslau (DE)
(72) Erfinder: Kamleithner-Maly, Uta, 2540 Bad Vöslau (DE)
(74) Vertreter: Jellinek, Gerhard

(57) **Zusammenfassung**

Die Erfindung betrifft eine neue Brandschutzeinrichtung für - Bauwerks-Trennelemente durchsetzende - Luft-Ver- und Abluft-Entsorgungsleitungen (7, 70), -führungen u. dgl., welche Einrichtung mindestens ein mechanisches Brandausbreitungs-Hemmelement aus der Gruppe Brandschutzklappe (3) und Brandschutzmanschette (2) mit Brandschutz-Laminatkörper (21) aus einem bei Einwirkung von Hitze im Brandfall intumeszierenden Polymer-Material umfasst, und ist dadurch gekennzeichnet, dass das Gehäuse (20) der Brandschutzmanschette (2) und das Gehäuse der Brandschutzklappe (3), und gegebenenfalls zusätzlich das Gehäuse einer Luft-Rückschlagklappe, entweder integral oder unterstützt durch Verbindungselemente miteinander zu einem fertig an- bzw. einbaufähigen Gesamt- bzw. Kompaktgehäuse (50) bzw. Brandschutz-Modul zusammengeschlossen sind.

Gemäß besonders bevorzugten Ausführungsformen sind Expansions-Führungselemente (4, 41) für das intumeszierende Laminat (21) und/oder eine Indikations-Einheit (38) für die eindeutige Anzeige der Ruhe- oder Sperrstellung der Klappenplatte (31) bzw. Klappenplattenflügel (310) der Brandschutzklappe (3) vorgesehen (Fig. 1).

## Beschreibung

Die vorliegende Erfindung betrifft eine neue Brandschutzeinrichtung für - Bauwerks-Trennelemente, insbesondere Wände, Leichtbauwände, Decken u. dgl., von Gebäuden, durchsetzende - Luft-Ver- und Abluft-Entsorgungsleitungen, -führungen u. dgl., welche - für die Hemmung der Ausbreitung von Feuer, Brandgasen und Brandrauch im Brandfall - eine Brandschutzklappe und eine Brandschutzmanschette mit in ihrem Inneren angeordnetem Brandschutz-Laminatkörper aus einem bei Einwirkung von Hitze intumeszierenden Polymer-Material umfasst.

Es ist schon eine Vielzahl von Vorschlägen für Sicherheitssysteme für den Schutz von Gebäuden und ihren Räumlichkeiten vor der im Brandfall auftretenden direkten Einwirkung und Ausbreitung von Feuer und den dadurch verursachten Schwel- und Rauchgasen in - das Gebäude durchziehenden Ent- und Belüftungsanlagen mit ihren Luftförderorganen, Rohrleitungen, insbesondere auf Basis der heute üblichen Spiral-Formrohre, Lüftungs- und Installationsschächten u. dgl. bekannt geworden und die für den Aufbau dieser Sicherheitssysteme vorgesehenen Brandschutzkomponenten sind in unterschiedlichen Ausführungsformen erhältlich.

Es soll hierzu auf die AT 411 965 B, DE 94 10 744 U1, EP 0 824 940 A2, GB 2 320 682 A, GB 2 268 224 A und auf die US 4 136 707 A hingewiesen werden, diese Druckschriften zeigen Brandschutzeinrichtungen für Wände bzw. Zu- und Abluftleitungen mit Brandschutzklappen und Brandschutzlaminat-Körpern aus einem bei Hitzeeinwirkung intumeszierenden Material.

Eine wesentliche derartige, in Systemen von Rohrleitungen Durchsetzungen von Gebäudewänden, Lüftungs- und Installations-Schachtwänden, Schacht-Abzugsöffnungen od. dgl. häufig zum Einsatz bzw. Einbau kommende Komponente stellen die in verschiedenen Formen produzierten und handelsüblichen, relativ einfach gebauten Brandschutzklappen mit schwenkbar gelagerten "ganzen" Klappenplatten oder mit - meist zwei, gemeinsam eine Sperrklappenplatte bildenden Klappenplattenflügeln dar, die beispielsweise wie folgt aufgebaut sind:

In einem Gehäuse sind z.B. zwei im wesentlichen etwa halbkreisförmige, hinsichtlich ihres Radius mit dem Innenradius des sie beherbergenden Gehäuses praktisch ident bemessene, unter Feder-Kraftbelastung stehende Klappenplattenflügel gelagert. Im Normal- bzw. Ruhezustand sind bei einer häufig zum Einsatz kommenden Ausführungsform der Brandschutzklappen die um eine Achse in Lage eines Durchmessers des kreisrunden eines runden oder der Mittelebene eines rechteckigen bzw. quadratischen Gehäuse-Innenquerschnitts dreh- bzw. schwenkbaren Klappenplattenflügel etwa in Richtung parallel zum Gehäuseachse bzw. in Richtung des das Gehäuse durchströmenden Luft- bzw. Abluftstromes angeordnet und z.B. mittels Schmelzsicherungselement aus einem bei relativ geringer Temperatur von z.B. 72°C schmelzenden Metall in einer "zusammengeklappten" Stellung aneinander gebunden. Übersteigt infolge Hitzeentwicklung im Brandfall die Temperatur die genannten 72°C, so beginnt das Metall des Schmelzsicherungselementes zu erweichen und schmilzt und die beiden feuer- bzw. brandgefahrseitig mit einem Feuerfest-Belag beschichteten Klappenplattenflügel klappen infolge der mittels einer starken Feder auf sie ausgeübten Kraft von der vorher genannten Achs-Längsstellung her auseinander und sperren gemeinsam den vorher freien Innen-Querschnitt des sie beherbergenden Brandschutzklappen-Gehäuses rauchgasdichtend und hocheffektiv brandausbreitungshemmend flächendeckend und damit auch jegliche weitere Strömung von Luft oder Abluft.

Im Zuge der Vereinheitlichung der Sicherheitsstandards in der Europäischen Union werden an wie hier kurz beschriebene Sicherheitskomponenten, insbesondere für den Brandschutz, immer noch steigende Anforderungen gestellt. Z.B. gehören heute handelsübliche und eingebaute Brandschutzklappen in relativ hohem Maße noch der Brandschutzklasse K30 an, was bedeutet, dass eine derartige Brandsicherheits-Komponente bloß mindestens 30 min den Belastungen durch einen Brand standzuhalten imstande sein müssen, bevor es zu einem Durchbruch des Brandes durch eine Rohrdurchführung in einer Wand kommt.

Der Trend bei neuen und immer noch in steigendem Maße in Neubauten und für die Nachrüstung von Altbauten eingesetzten Be- und Entlüftungssystemen u.dgl. geht in Richtung des Einbaus von Brandschutz-Komponenten, welche möglichst den Anforderungen der Brandschutzklasse K90 genügen, was bedeutet, dass solche Brandschutz-Komponenten mindestens 90 min lang den Belastungen im Brandfall standhalten müssen, also z.B. in einem Be- und Entlüftungs-Rohrsystem den Durchbruch eines Brandes durch Durchgangsöffnungen in Gebäudewänden und/oder -decken bei voller Aufrechterhaltung der Rauch-Dichtigkeit zu verhindern imstande sein müssen.

Die Erfindung hat sich die Aufgabe gestellt, eine hochwirksame Brandschutz-Einrichtung, vorzugsweise mit kurzer Baulänge, zu schaffen, welche entweder innen oder aber außen direkt an eine Durchsetzungsöffnung in einer Trennwand, Decke od. dgl. eines Gebäudes, und zwar direkt an die für die zu fördernde Luft bzw. Abluft zu durchsetzende Wand anschließend montiert werden kann, und dann eben nicht in der Durchsetzungsöffnung selbst angeordnet ist, wobei die Brandschutz-Einrichtung dennoch so gestaltet ist, dass sie die Anordnung von knapp an die genannte Wand-Durchsetzungsöffnung anschließenden bzw. dort heranreichenden Rohrkrümmern, T-Rohrstücken oder dgl. in dem dortigen Abschnitt einer Luft- bzw. Abluft-Rohrleitung zulässt. Es soll erreicht werden, dass es hinsichtlich Brandschutzwirkung nicht mehr darauf ankommt, ob die Brandschutz-Einrichtung im wesentlichen in der Wand-Durchsetzungsöffnung oder aber außen auf den zu durchsetzenden Wand in unmittelbarer Nähe der Wand-Durchsetzungsöffnung auf der Brandgefährdungs-Seite oder auf der anderen, an sich im Brandfall zuerst jedenfalls einmal weniger gefährdeten Seite der von einer Luftförderleitung durchsetzten Wand, Trennwand, Decke od. dgl. des Gebäudes angeordnet wird.

Gegenstand der Erfindung ist eine neue Brandschutz-Einrichtung gemäß dem **Oberbegriff** des **Anspruches** 1, welche die im **Kennzeichen** dieses **Anspruchs** genannten Merkmale aufweist.

Für eine im Rahmen der Erfindung bevorzugte Ausführungsform mit Montage-Rosette od. dgl. gemäß **Anspruch** 2 ist dieselbe am Gehäuse der Brandschutzmanschette angeordnet, und zwar so, dass das hochwirksam brandausbreitungs-hemmende Brandschutzlaminat in dem Gehäuse direkt im Nahbereich der bzw. neben der Wanddurchsetzungs-Öffnung positioniert ist und dieselbe bzw. den Durchgang durch dieselbe im Fall eines Brandes hoch-effektiv sperrt, auch wenn das Laminat eben nicht direkt in der Wand bzw. in der Wand-Öffnung selbst, sondern in diesem Fall außerhalb derselben positioniert ist.

Diese Variante ist dadurch ermöglicht, dass die Brandausbreitungs-Sperrwirkung der erfindungsgemäß ausgebildeten Brandschutzmanschette besonders hoch ist und daher die "Vorschaltung" eines im Vergleich zu einer Brandschutzklappe einfacheren Sperrorgans in der im Anspruch 1 oder 2 beschriebenen Bauart völlig ausreichend ist, um K90-Brandsicherheit zu gewährleisten.

Wesentlich ist eine Ausbildung der neuen Brandschutz-Einrichtung als Brandschutz-Gesamt-Modul, in welchem die Brandschutzmanschette mit der Brandschutzklappe bevorzugt von vornherein jedenfalls zusammengefügt bzw. zusammengebaut, und gegebenenfalls mittels Nietung, Schraubung od. dgl. zu einer Einheit verbunden ist, wie gemäß Anspruch 1 vorgesehen.

Es ist mit der neuen Brandschutz-Einrichtung schon in ihrer Grundform - egal, auf welcher Seite einer Wand dieselbe für die Abschottung einer sich dort befindlichen Durchsetzungsöffnung für die Durchführung einer Rohrleitung montiert ist - eine unmittelbare Nähe von zwei an sich schon jeweils allein besonders wirksamen Brand- und Brandrauch-Ausbreitungs-Hemmorganen zueinander sichergestellt, und somit lässt sich ein weit über einen reinen Summeneffekt hinausgehender, synergistischer Effekt bei der Abschottung von Wanddurchsetzungsöffnungen gegen das Ein- und Durchdringen von Feuer, giftigen Brand- und Schwelgasen sowie von Brandrauch aus einem Raum, aus einem Schacht od. dgl., eines Gebäudes, in welchem ein Brand ausgebrochen ist, in einen anderen, vor dem Übergreifen des Brandes zu schützenden Raum od. dgl. erreichen.

Weiters bevorzugt ist eine Ausführungsform der neuen Brandschutzeinrichtung für - Bauwerks-Trennelemente aller Art in Gebäuden durchsetzende - Luft-Ver- und Abluft-Entsorgungsleitungen, -führungen od. dgl., insbesondere für solche mit höheren Innen-Querschnittsweiten bzw. -durchmessern, vorzugsweise mit solchen von über 150mm, mit einer die Ausbreitung von Feuer, Brandgasen und Brandrauch hemmenden Brandschutzklappe und einem mit Stabilisierungs- bzw. Führungselementen für den Brandfall ausgerüsteten Brandschutz-Laminat gemäß dem **Anspruch 3.**

Zum Stand der Technik auf diesem Gebiet ist folgendes kurz auszuführen:

Aus der GB 2 268 224 A ist eine Brandschutzeinrichtung für Briefschlitze bekannt, deren wesentliches Brandschutzelement durch eine im Fall höherer Temperatur stark aufquellende und so den Briefschlitz gegen einen Branddurchbruch sicher sperrende Intumeszenzmasse in der Schlitzöffnung einer Türe, Wand od. dgl. gebildet ist.

Die DE 20 52 683 A1 offenbart eine Feuerschutzpatrone für den Einbau in Lüftungsleitungen mit einem sich in Durchtrittsrichtung erstreckenden Einsatzteil aus einem in der Hitze, also im Brandfall, intumeszierenden Material, das dann den gesamten Durchtrittsquerschnitt brandausbreitungshemmend ausfüllt.

Sowohl der DE 94 10 744 U1 als auch der US 4 136 707 A sind Brandschutzeinrichtungen für Lüftungsleitungen od. dgl. zu entnehmen, bei welchen für eine Sperrung des Durchflussquerschnitts im Brandfall geeignete schwenkbare Klappenflügel vorgesehen sind, welche sich rückseitig an dort befindlichem Intumeszenzmaterial abstützen und im Brandfall von diesem dann stark aufschäumenden und quellenden Material in eine den Durchflussquerschnitt sicher sperrende Stellung geklappt werden.

Auch die DE 102 07 212 A1 hat eine Einrichtung zum Verschließen eines Wand- oder Deckendurchbruchs zum Gegenstand, wobei dort durch Vorsehen eines Dehungsausgleiches verhindert wird, dass das im Brandfall intumeszierende Material aus der Wandöffnung herausquillt. Dazu wird das intumeszierende Material, das sich bei Hitzeeinwirkung in den Wanddurchbruch hinein ausdehnt, mit Hilfe einer Hülse und einer Anschlagsplatte in axialer Richtung geführt.

Es soll jedoch diese Ausführungen erweiternd ausgeführt werden, dass - im Falle von Luft-Förderleitungen mit höheren Innenweiten und eben entsprechend weiteren Durchlässen durch Trennwände, Decken od. dgl. in Gebäuden - die Brandschutzklappen vorteilhaft nicht mit geteilten Brandschutz-Klappenplatten, sondern meist in einer z.B. kreisrunden oder einem rechteckigen oder quadratischen Innen-Querschnitt entsprechenden Form vorgesehen sind, wobei entweder wieder eine Feder-Kraftbeaufschlagung für die rasche Verschwenkung der Klappenplatte in die Sperrstellung im Brandfall vorgesehen werden kann, welche durch eine Schmelzsicherung oder durch Handbetätigung vorgenommen werden kann, sodass die kreisförmige, quadratische oder rechteckige Brandschutz-Klappenplatte um eine Dreh-Achse in ihrer Mitte mittels der Feder äußerst rasch in die Sperr-Stellung geschwenkt werden kann und auf diese Weise im Brandfall der freie Durchtritt von Abluft bzw. Abgas durch den praktisch freien Innenraum der Brandschutzklappe mit hoher Sicherheit verhindert ist.

Es sind weiters auch Varianten bekannt, welche mit Motoren für die Betätigung der wie soeben beschriebenen Brandschutz-Klappenplatte ausgestattet sind.

Es ist also im Rahmen der Erfindung die Aufgabe gestellt gewesen, eine Ausführungsform der neuen Brandschutz-Einrichtung für Leitungen mit großem bzw. größerem Innen-Querschnitt zur Verfügung zu stellen, in welche zumindest zum Teil schon bekannte Brandschutz-Einzelkomponenten integriert sind und die selbst dann, wenn die Einzel-Komponenten jede für sich einer niedrigeren Brandschutzklasse als K90 angehören, jedenfalls in Kombination miteinander, also eben als Modul den Anforderungen der Brandschutzklasse K90 durchaus entsprechen bzw. dieselben wesentlich über-erfüllen.

Wesentliche Aspekte bleiben weiterhin möglichst kurze Baulänge, Kompaktheit, Preiswürdigkeit und eben schnelle, sichere und problemlose Einbaubarkeit in neu zu erstellende oder schon bestehende Lüftungs- und Installationssysteme sowie nicht zuletzt möglichst einfache Auswechselbarkeit sowie weiters - und dies ist insbesondere im Falle von Luft- bzw. Abluftrohrleitungen mit hohen Innen-Querschnittsweiten wichtig - mit trotz der hohen oder höheren Innenweiten in hohem Maße gewährleisteter Brand- und Rauchgasausbreitungs-Hemmwirkung.

Bis jetzt war es für Wand-Durchführungen für Rohre mit größeren Innen-Weiten, insbesondere mit solchen größer als 150 mm wichtig, die soeben genannte Brandschutzklappe direkt und voll in die Wand-Durchführungsöffnung für eine (Ab)Luft-Rohrleitung zu positionieren, was relativ hohen Aufwand erfordert. Wenn jedoch die Brandschutzklappe außerhalb der Wand mit der Durchführungsöffnung für die Rohrleitung anzuordnen war, musste diese Brandschutzklappe in einer bis zur Wand hin reichenden, dort dichtend angeschlossenen und die Brandschutzklappe rundum umgebenden Verkleidung, also Umhausung, aus einem feuerresistenten Material angeordnet werden, was selbstverständlich aufwändig ist, aber auch gegebenenfalls nachteilig sein kann, weil eine solche Umkleidug relativ viel Platz erfordert, der gerade bei Be- und Entlüftungssystemen oft nur in beschränktem Maße zur Verfügung steht.

Es wurden daher immer wieder Überlegungen angestellt, wie auf eine solche feuerresistente Umkleidung der Brandschutzklappe verzichtet werden kann, wobei im Rahmen der zu der besonderen Ausführungsform im Rahmen der vorliegenden Erfindung führenden Überlegungen der Gedanke aufgetreten ist, die Brandschutzklappe mit einer an sich als für dem Brandschutz hoch wirksam bekannten und bewährten Brandausbreitungs-Hemmeinrichtung, nämlich mit einer - im Fall kleinerer Nennweiten schon bisher äußerst bewährten - Brandschutzmanschette in ihrer Brand-Hemmwirkung effektiv zu unterstützen.

Bei der hier in Rede stehenden vorteilhaften Ausführungsform bestand das Ziel darin, eine - in ihrer Wirksamkeit weit über die Wirksamkeit bisher bekannter Lösungsvorschläge für Wand- und Decken-Durchführungen für Rohrleitungen von Be- und Entlüftungs-Anlagen, insbesondere mit Innen-Nennweiten von mehr als 150 mm hinausgehende - Brandschutzeinrichtung zu schaffen, bei welcher ein Einbau der bzw. zumindest einer der sie bildenden Brandschutz-Komponenten weder direkt in die Wand, also weder in eine Wand-Durchführungsöffnung erfolgen muss, noch eine Umkleidung einer außerhalb der Wand bzw. der Rohrleitungs-Durchführung positionierten Brandschutzkomponente unbedingt notwendig ist.

Für die Lösung dieser Aufgabe wurde der Einsatz einer einen entsprechend großen Innen-Querschnitt aufweisenden Brandschutzmanschette als brandhemmungsunterstützende Komponente der neuen, insbesondere einbaufertigen, Brandschutz-Einrichtung erwogen.

Es hat sich im Rahmen eingehender und aufwändiger Brandschutz-Tests mit Brandschutzmanschetten mit größeren Innenweiten gezeigt, dass ab einer gewissen Querschnittsweite, das heißt also ab einem gewissen Durchmesser im Falle einer einen (kreis)runden Innen-Querschnitt aufweisenden Rohrleitung und somit einer eine entsprechend kreisrunde Innen-Querschnittsfläche ihres Gehäuses aufweisenden Brandschutzklappe bzw. im Falle eines größeren Abstandes zweier einander gegenüberliegender Wände einer Rohrleitung bzw. eines entsprechenden Wanddurchlasses mit quadratischem bzw. rechteckigen Innen-Querschnitt, und zwar eben insbesondere ab etwa 150 mm Innenweite, im Brandfall keine Gewähr mehr dafür besteht, dass sich das Brandschutzlaminat im Falle eines runden Rohrquerschnittes vornehmlich nur radial zur Gehäuseachse hin, bzw. im Falle eines quadratischen oder rechteckigen Innen-Querschnitt aufweisenden Brandschutzmanschetten-Gehäuses in linear geformten Fronten nur zur Innen-Querschnitts-Mittelebene, also auf einander zu hin ausdehnt.

Es kommt, wie gefunden wurde, zu gegenseitigen seitlichen Relativ-Verlagerungen der den Laminatkörper bzw. die Laminat-Teilkörper bildenden Laminatlagen, und zwar in nicht vorhersehbarer Art und Weise, da die Laminat-Schichten auf der Seite der Brand- bzw. Hitzeeinwirkung sehr rasch mit der an sich gewünschten, raschen und großen Volumsexpansion beginnen, wodurch sie gegen die Nicht-Brandseite hin, wo sie zuerst einmal noch kühl bleiben und nur langsam zu expandieren beginnen, aus dem Brandschutzmanschetten-Gehäuse seitlich hinausgedrängt werden. Auf diese Weise kommt es letztlich zu einer völligen Desintegration und somit zur Zerstörung der Laminatmasse.

Infolge dieses Phänomens ist keine wirkungsvolle und in den meisten Fällen letztlich überhaupt keine Sperrung des Innenquerschnitts des Gehäuses gegen das Durchdringen von Feuer, Brandgasen und Rauch durch das Brandschutz-Laminat mehr gegeben, und die Brandschutzmanschette kann zu der Brandausbreitungs-Hemmwirkung durch die ohnehin vorhandene Brandschutzklappe absolut nichts mehr Zusätzliches beitragen.

Es hat sich somit zur Erreichung einer wesentlichen Erhöhung der Brandsicherheit in Be- und Entlüftungs-Rohrleitungssystemen od. dgl. mit Rohren mit größeren Nennweiten die Aufgabe gestellt, mit vergleichsweise geringem technischen Aufwand die Brandschutzklappe bzw. ein ähnliches Sperrorgan mit einer Brandschutzmanschette mit größerer Nennweite bzw. freier Innen-Querschnittsfläche ihres Gehäuses wirkungsvoll zu unterstützen, indem die beschriebene Desintegration des Brandschutz-Laminates im Brandfall mit hoher Sicherheit verhindert ist, und die Laminatmasse in voller Sicherheit die Wirkung der Brandschutzklappe im gemeinsamen Gehäuse wesentlich erhöht.

Gemäß dieses wichtigen Teilaspektes der Erfindung hat sich die Ausführungsform einer Brandschutz-Einrichtung gemäß dem Anspruch 3 besonders bewährt.

Dieser insbesondere bei höheren Innen-Querschnittsweiten der Rohre vorteilhaften Ausführungsform der Erfindung liegt die auch für erfahrene Fachleute auf dem Gebiet des Brandschutzes überraschende Erkenntnis zugrunde, dass die soeben beschriebenen, ausgesprochen einfachen linearen bzw. "ebenen" Führungselemente selbst unter den extremen Bedingungen im Brandfall - solche werden im Zuge der oben erwähnten Brandsicherheits-Tests konkret simuliert - völlig ausreichen, um das Brandschutzlaminat, wie es umgangssprachlich heißt, "bei der Stange zu halten", so dass es im Brandfall nicht mehr zu der wie oben näher beschriebenen Deformation der intumeszierenden Masse z.B. nach jener Seite hin kommt, wo infolge dort noch geringer Hitzeeinwirkung ein geringerer Material-Eigendruck herrscht, und dann eben die seitlichen Relativverschiebungen der einzelnen Schichten des Brandschutzlaminat-Körpers gegeneinander verhindert sind und somit auch eine letztlich desaströse Desintegration der Intumeszenzmasse. Velmehr wird eine hocheffektive Sperrung des Durchgangs-Querschnittes der Rohrleitung bzw. des Brandschutzmanschetten-Gehäuseteils erreicht, durch welche ein Übergreifen von Feuer im Bereich einer Rohrleitungs-Durchführung durch eine Wand, Decke od. dgl. und jegliches Durchdringen von giftigen Brandgasen und des Brandrauches durch die WandDurchführung verhindert ist.

Von den beiden grundsätzlichen Lösungen gemäß dieser Ausführungsform der Erfindung, nämlich einerseits Führung des im Brandfall intumeszierenden Brandschutzlaminats entlang von im Inneren desselben angeordneten, dasselbe durchsetzenden Führungsschienen, -stiften -stäben od. dgl. und/oder andererseits "Einsperrung" des Laminats zwischen zwei dessen Volumsausbreitung käfigartig nach beiden Seiten hin definiert begrenzenden Führungsflächen, wie z.B. mit Gittern od. dgl., ist die überraschend einfache Lösung mit den linearen Führungselementen besonders bevorzugt.

Bei der "Käfig-Lösung", die sich beispielsweise dann bewährt, wenn der einstückige Laminatkörper bzw. die Laminat-Teilkörper besonders "breit" ist bzw. sind, ist der technische Aufwand höher, und diese Lösung führt zu einer gewissen, wenn auch nicht bedeutenden, Verringerung des für die Förderung der (Ab)Luft im Normalbetrieb zur Verfügung stehenden Strömungsquerschnitts.

Zusammenfassend sind mit bei dieser Ausführungsform der vorliegenden Erfindung gemäß Anspruch 3 folgende Vorteile gegeben:
1.) Die Brandschutzklappe bzw. deren Klappenplatten kann bzw. können außerhalb einer rohrleitungs-durchsetzten Wand positioniert worden, und es ist dennoch an sich keine zusätzliche Brandschutz-Verkleidung und deren -Befestigung notwendig, wie sie die Ö-Norm bzw. die Bauordnungen in Österreich für F 90-Wände ab 40 mm Gipskarton mit einer 30-fachen Sicherheit für deren Aufhängung vorschreiben.
2.) Das Laminat wird bei seiner Expansion im Brandfall mittels der dasselbe durchsetzenden, billigen und mit äußerst geringem Aufwand in das Gehäuse der neuenBrandschutz-Einrichtung einbaubaren Metall(Gewinde)stangen, -stifte, -stäbe, -rohre od. dgl. geführt und ist in seiner Einbaulage im genannten Gehäuse fixiert und die Volums-Expansion bei Hitzeeinwirkung im Brandfall erfolgt eben dann entlang definierter Wege, und es kann im Brandfall zu keiner desaströsen Desintegration des Laminates mehr kommen.
3.) Die im Brandfall auftretenden, relativ großen Längsdehnungen der Rohre, des Gehäuses bzw. der Gehäuse der neuen Brandschutz-Einrichtung lassen sich durch längsdehnungs-ausgleichende Kunststoff- oder Aluminium-Rohr-Zwischenstücke, Schlauchstücke oder Schiebestutzen-Kopplungen beherrschen.
4.) Wie schon oben erwähnt, benötigen die Brandschutzklappen infolge der Ergänzung mit den neuen, im gemeinsamen Gehäuse untergebrachten, Brandschutzmanschetten nun keineswegs mehr zwingend einer Brandschutz-Verkleidung und keine spezielle Befestigungssysteme für dieselbe.
5.) Die Brandschutzklappen-Flügel können beliebig mittels -Halteelementen, wie in einfachster Weise mittels eines im Brandfall schmelzenden Lots oder durch eine aus einer Glaspatrone freigegebene Feder oder gegebenenfalls mittels Stellmotor betätigt werden.
6.) Die Brandschutzklappen und die Brandschutzmanschetten im Gehäuse können mit beliebig rundem, rechteckigem oder quadratischem Innen-Querschnitt ausgeführt sein.
7.) Die neue Brandschutz-Einrichtung kann nunmehr auch beliebig außen an Wänden, Zwischenwänden, Schachtwänden, Decken od. dgl. im Nahbereich von Durchgangsöffnungen montiert werden.
8.) Die neue Brandschutz-Einrichtung kann auch an Ziegel-, Betonwänden oder - decken ohne zusätzliche Befestigung für eine wie bisher unumgänglich notwendige brandresistente Verkleidung montiert werden.
9.) Die neue Brandschutz-Einrichtung kann bei schon bestehenden Be- und Entlüftungs-Anlagen nachträglich ohne aufwändige Stemmarbeiten und ohne den bisher notwendigen Aufwand für die Verkleidung oder für zusätzliche Befestigungssysteme montiert werden.

Eine weitere, insbesondere im Sinne der Erhöhung der Sicherheit der neuen Brandschutz-Einrichtung günstige Ausbildungsform der Erfindung besteht in deren Ergänzung und wesentlicher Verbesserung durch ein insbesondere mechanisches und/oder elektrisches Warnsystem, welches in seinen Grundformen dem **Anspruch** 4 zu entnehmen ist.

Besonders bevorzugt ist weiters eine Ausbildungsform der neuen Brandschutz-Einrichtung mit einem tatsächlich einstückigen Gehäuse, in welchem das wandöffnungsnah bzw. zumindest teilweise in der Wandöffnung anzuordnende Brandschutzlaminat und die Brandschutzklappen-Sperrplatte bzw. die Klappenplattenflügel derselben untergebracht ist bzw. sind, wie im **Anspruch** 5 geoffenbart.

Dem **Anspruch** 6 ist eine im Rahmen der Erfindung bevorzugte Ausbildungsform des soeben erwähnten Gehäuses der neuen Brandschutz-Einrichtung zu entnehmen.

Gemäß **Anspruch** 7 ist vorteilhafter Weise vorgesehen, dass die Lager der Klappenplatte bzw. der Klappenplattenflügel im gemeinsamen Kompaktgehäuse bzw. - modul in einem möglichst geringen Abstand zum Brandschutz-Laminatkörper angeordnet sind, wobei ein Abstand bevorzugt ist, bei welchem die Klappenplatten mit einer ihrem kreisbogenförmigem Außenrand bzw. die Klappenplattenflügel im Ruhe- bzw. Nichtfunktions-Zustand mit dem Zenit-Bereich ihres runden bzw. kreisförmigen Außenrandes (im Fall eines einen (kreis)runden Innen-Querschnitt aufweisenden Kompaktgehäuses) bzw. mit ihren zur Lager-Achse parallel verlaufenden, geradlinige Außenrändern (im Fall eines Rechteck- oder Quadrat-Innenquerschnitt aufweisenden Kompaktgehäuses) in den Freiraum innerhalb des im wesentlichen hohlzylinderförmigen Laminatkörpers bzw. zwischen den beiden Teilkörpern des Laminatkörpers hineinragen oder aber durch denselben hindurchragen können, eine - später zu besprechende - besondere Ausführungsform, die selbstverständlich bei Vorsehen eines Brandschutz-Laminats mit Führungselementen gegen Verformung bei Erhitzung in dieser extremen Form nicht zum Tragen kommen kann.

Bei dieser Ausführungsform der Erfindung gemäß Anspruch 7 können die Lager für die mit zwei - im Sperr- bzw. Schließzustand im Brandfall zu einer den jeweils (kreis)runden oder rechteckigen bzw. quadratischen Innen-Querschnitt des Brandschutzklappen-Gehäuses bzw. -Gehäuseteils voll deckenden (kreis)runden oder rechteckigen bzw. quadratischen Sperr-Platte aufklappbaren, etwa halbkreis- oder halbrechteck- bzw. halbquadratförmigen Klappenplattenflügel sehr nahe an den im anschließenden Gehäuse bzw. Teil des Kompaktgehäuses untergebrachten Brandschutzlaminat-Körper herangerückt werden, und somit ist es möglich, eine geringe bzw. die minimale Baulänge der neuen Brandschutz-Einrichtung zu erzielen, welche im Minimalfall - gegebenenfalls bloß um den Platzbedarf der Lager für die Brandschutz-Klappenplatte bzw. für die Klappenplattenflügel vergrößert - dem Radius bzw. der halben Breite der Klappenplatte bzw. dem Radius bzw. der Breite der beiden Klappenplattenflügel entspricht.

Mit der neuen Brandschutz-Einrichtung in der zuletzt beschriebenen Form ist einerseits die erfindungsgemäß angestrebte und im Sinne der Verhütung der Ausbreitung eines Brandes innerhalb eines Gebäudes hoch effektive und auch im Sinne einer infolge des geringen Platzbedarfs hochflexiblen Gestaltung eines Be- und Entlüftungssystems in einem Gebäude zu bevorzugende, besonders kurze Baulänge der neuen Brandschutz-Einrichtung erreichbar und andererseits ist eine besonders vereinfachte Art der Montage derselben, außen an der Wand ohne die Gefahr eines irrtümlich "verkehrten" Ein- bzw. Anbaus derselben gesichert.

Gemäß einer weiteren vorteilhaften Ausführungsform, wie sie der **Anspruch** 8 offenbart, ist vorgesehen, dass das gemeinsame Gesamt- bzw. Kompaktgehäuse einen sich an seinen für die Anordnung des Laminatkörpers vorgesehenen Erweiterungsabschnitt material-integral anschließenden, im wesentlichen der Innen-Querschnittfläche der an die Brandschutzeinrichtung beidseitig angeschlossenen Luft- bzw. Abluftführungs-Leitungen entsprechende Innen-Querschnittsfläche aufweisenden engeren und nur relativ geringe Länge in Axialrichtung aufweisenden Stutzenteil umfasst, in bzw. an dessen Wandung die Brandschutz-Klappenplatte bzw. die Klappenplattenflügel gelagert sind.

Was das insbesondere für das einstückige Kompaktgehäuse der erfindungsgemäßen Brandschutz-Einrichtung vorteilhafterweise einzusetzende Material betrifft, so ist dasselbe günstigerweise ein Stahlblech, welches nach einem Fließpressverfahren verarbeitet ist, wie aus dem **Anspruch** 9 hervorgeht.

Was nun die verschiedenen vorteilhaften Ausführungsformen der neuen Brandschutz-Einrichtung, insbesondere im Zusammenhang mit der Führung des Brandschutz-Laminats bei Expansion, betrifft, so kann gemäß **Anspruch** 10 vorgesehen sein, dass der in einem - kreiszylindrischen Innenquerschnitt aufweisenden - Brandschutzmanschetten-Gehäuseteil angeordnete toroid-artige Brandschutz-Laminatkörper Laminat-Führungselemente in Form von zumindest drei, bevorzugt in untereinander gleichen Winkel- bzw. Bogenabständen voneinander im bzw. am genannten Gehäuse bzw. Gehäuseteil befestigten, radial nach innen zur Gehäuseachse hin ragenden und den Laminat-Toroid-Körper bzw. die denselben bildenden Brandschutzlaminat-Lagen durchsetzenden, rigiden Laminat-Führungsstäben, -stiften, schäften, -schienen, -rohren od. dgl. aufweist.

Gemäß **Anspruch** 11 kann vorgesehen sein, dass die genannten, radial nach innen zur Gehäuseachse hin aufeinander zu ragenden Laminat-Führungsstäbe od. dgl. in einem Abstand von der Gehäuseachse frei enden, was eine besonders einfache Montage derselben ermöglicht und einen mittigen Stau. der zur Gehäuseachse drängenden Intumeszenz-Masse im Brandfall verhindert.

Gemäß diesem Anspruch kann weiters alternativ vorgesehen sein, dass die radial nach innen hin ragenden Laminat-Führungsstäbe od. dgl. bzw. deren freie Enden im Nahbereich der Gehäuseachse materialschlüssig oder mittels eines Verbindungsstückes miteinander verbunden sind. Bei dieser Ausführungsform ist der Vorteil gegeben, dass sie noch stabiler ist, als eine Anordnung, bei welcher die Führungsstäbe mittig nicht miteinander verbunden sind.

Gemäß einer weiteren Variante dieses Anspruchs kann vorgesehen sein, dass jeweils anstelle von jeweils zwei entlang einer Durchmesser-Geraden nach innen hin aufeinander zu ragenden Stiften jeweils nur ein, und zwar jeweils ein den freien Innen-Querschnitt des Brandschutzmanschetten-Gehäuses voll durchsetzender Laminat-Führungsstab od. dgl. vorgesehen ist.

Alternativ können gemäß diesem Anspruch zwei oder mehr jeweils von einer Gehäuse-Wand zur gegenüberliegenden Gehäuse-Wand reichende, durchgehende Führungsstäbe od. dgl. vorgesehen sein, wobei dieselben in bevorzugt zwei - jeweils sich im Abstand zueinander, nebeneinander und parallel zueinander erstreckenden - verschiedenen geometrischen Ebenen, also etwa windschief zueinander, angeordnet sind, oder aber es kann eine weitere günstige Ausbildungsform der Erfindung darin bestehen, dass die Führungsstäbe od. dgl. über den weitaus größten Bereich ihrer Erstreckung hinweg im Wesentlichen in einer geometrischen Ebene liegen und nur mittig einander über entsprechende "Ausbuchtungen" od. dgl. einander ausweichend ausgebildet sind.

Schließlich kann, gemäß diesem Anspruch weiters eine Verbindung der Führungsstäbe bzw. -stifte im Mittelbereich bzw. im Bereich der Gehäuseachse bzw. Gehäuse-Mittelebene vorgesehen sein.

Der **Anspruch** 12 offenbart eine weitere bevorzugte Ausführungsform der Führungselemente für Brandschutzmanschetten mit rechteckigem oder quadratischem freiem Innen-Querschnitt.

Dem **Anspruch** 13 ist eine kostengünstige und einfache Art der Befestigung der Laminat-Führungsstäbe od. dgl. zu entnehmen, wobei der Einsatz von Laminat-Führungsstäben bzw. -stiften gemäß der dort genannten bevorzugten Ausbildungsvariante günstig ist.

Wie schon oben erwähnt, bestehen zwei einander ähnliche, bevorzugte Ausbildungsvarianten gemäß dem **Anspruche** 14 jeweils in einer Art von - den im Brandfall intumeszierenden Brandschutz-Laminatkörper bzw. die Laminat-Teilkörper beidseitig flankierenden, den Strom der Luft bzw. Abluft im Rohrleitungssystem nur unwesentlich verringernden - Führungs-Käfigstäben oder Führungs-Käfignetzen, -gittern, - sieben, -lochplatten od. dgl.

Vorteilhaft ist insbesondere eine Ausführungsform des Gehäuses der neuen Brandschutzmanschette mit einem an dasselbe angeformten Wand-Montage-Flansch bzw. mit einer derartigen Montage-Rosette oder Montage-Umrandung für eine Befestigung der mit der neuen Führungselementen ausgestatteten Brandschutz-Manschette und der sich im gleichen Gehäuse komplex befindlichen Brandschutzklappe an einer Außenfläche einer Gebäude- oder Schachtwand in unmittelbarer Nähe zu einer Rohrleitungs-Wanddurchführung, aber eben außerhalb derselben.

Der Vorteil einer solchen kompletten "Außen-Brandschutzmanschette" liegt insbesondere darin, dass sie einfach zu montieren ist und dass bei ihr eine Montage in Fehllage ausgeschlossen ist.

Schließlich ist eine Ausbildungsvariante der neuen Brandschutz-Einrichtung mit Laminatführung gemäß **Anspruch** 15 vorteilhaft kurz gebaut.

Wie schon eingangs im Zusammenhang mit Anspruch 4 klargestellt, ist die Brandschutz-Einrichtung gemäß der vorliegenden Erfindung bevorzugterweise mit einem Indikatorsystem ausgestattet, welches es ermöglicht, die Stellung der Brandschutzklappenplatte bzw. der Klappenflügel im Gehäuse - also ob dieselbe(n) sich in der den vollen Durchgang von Luft bzw. Abluft zulassenden Ruhe-Stellung oder sich aber infolge einer höheren Erhitzung im Luft- bzw. Lüftungssystem, insbesondere infolge eines Brandgeschehens, in der einen Luft-Durchgang effektiv und voll sperrenden Sperr-Stellung befindet - jederzeit von außen, also von außerhalb des Gehäuses, der Wanddurchsetzungsöffnung und/oder der Luftführungsrohre eindeutig anzuzeigen.

Für den bzw. im Anspruch 4 sind schon einige spezielle Ausführungsarten solcher Klappenstellungs-Indikatoren genannt.

Die **Ansprüche** 16 und 17 haben zwei besonders einfache und auch im Brandfall voll funktionierende, nicht störungsanfällige derartige Indikator-Systeme zum Gegenstand, wobei der rein mechanisch funktionierende Klappenstellungs-Indikator gemäß Anspruch 16 besonders hohe Ansprechsicherheit aufweist, aber unter Umständen Schwierigkeiten beim raschen Erkennen der Indikation, z.B. bei Rauchentwicklung bereiten kann, während der Indikator gemäß Anspruch 17 etwas störungsanfälliger sein kann, jedoch, wie alle elektrischen und/oder magnetischen Systeme, auch eine Ferndiagnose, z.B. an einer zentralen Schaltwarte, ermöglicht.

Anhand der Zeichnung wird die Erfindung näher erläutert:

Es zeigen die Fig. 1 die Ansicht eines Schnittes durch eine erfindungsgemäße mehrteilige Brandschutz-Einrichtung die Fig. 2 und 3 zwei einander ähnliche, besonders bevorzugte, besonders geringe Baulängen aufweisende Ausführungs-Varianten der neuen Kompakt-Brandschutzeinrichtung und die Fig. 4 schematisch einen Ausschnitt aus einem Kompaktgehäuse mit Rechteck-Innenquerschnitt und einem mit zwei Teil-Laminatkörpern gebildeten Laminatkörper.

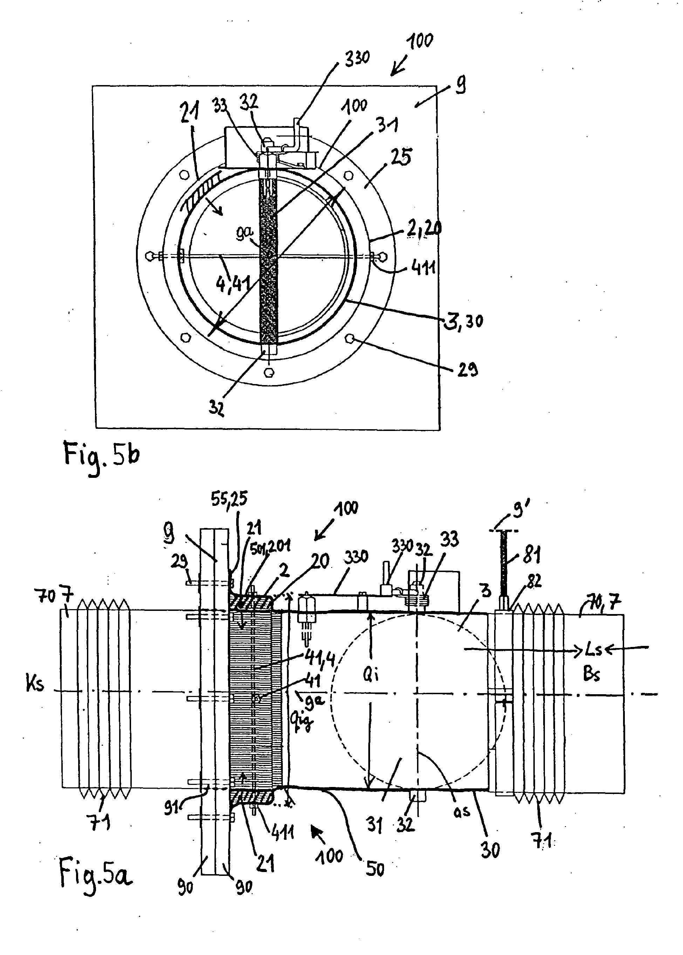

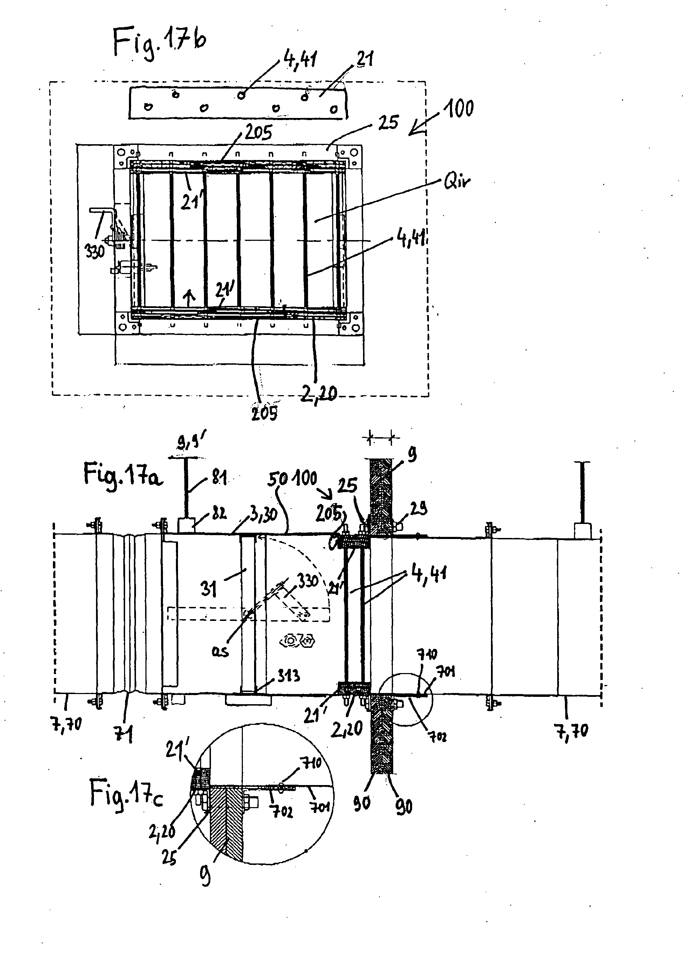

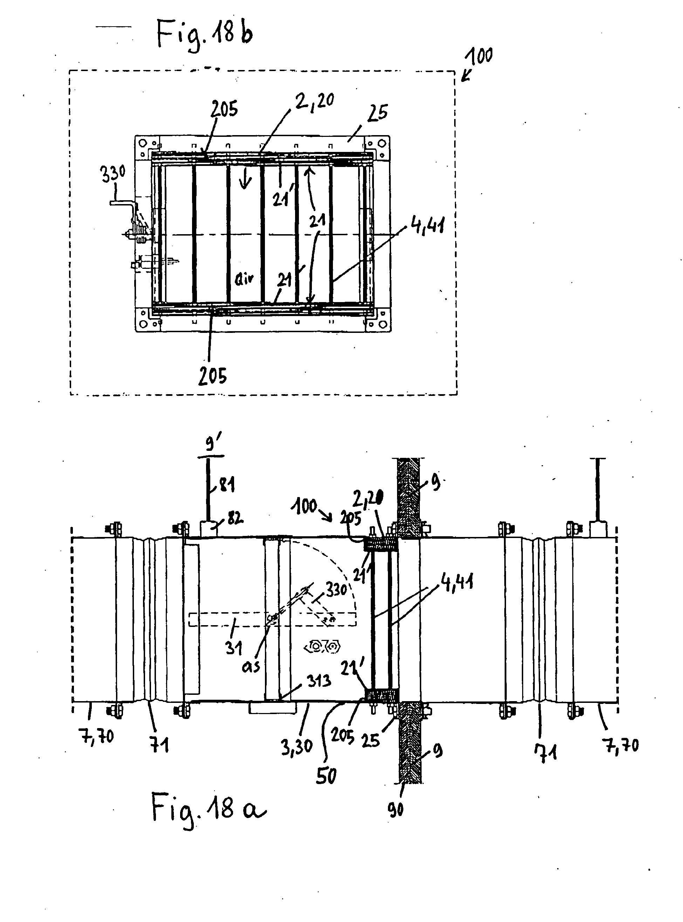

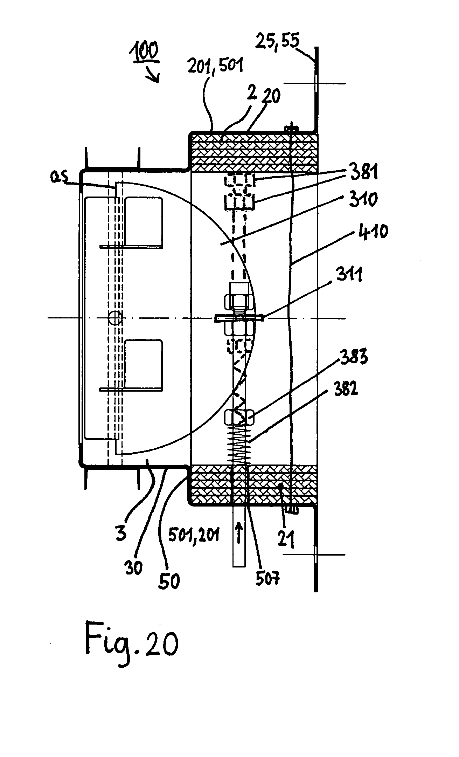

Es zeigen weiters die Fig. 5 bis 7 jeweils in Seitenansicht bzw. Teilschnitt drei verschiedene Varianten der erfindungsgemäßen Einrichtung mit Führungselementen für das Brandschutz-Laminat, die Fig. 8 bis 16 jeweils schematisch verschiedene Ausführungsformen der für die erfindungsgemäße Brandschutz-Einrichtung vorgesehenen neu ausgestatteten Brandschutzmanschette und die Fig. 17, 18 und 19 drei weitere Ausführungsform der Brandschutzreinrichtung gemäß der Erfindung mit Laminatführungselementen.

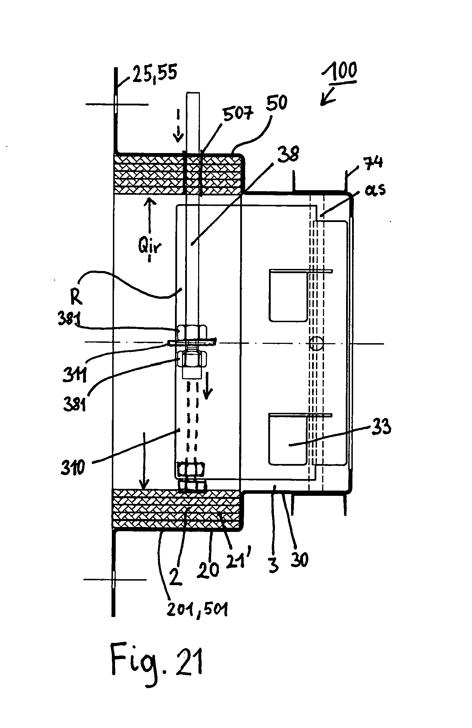

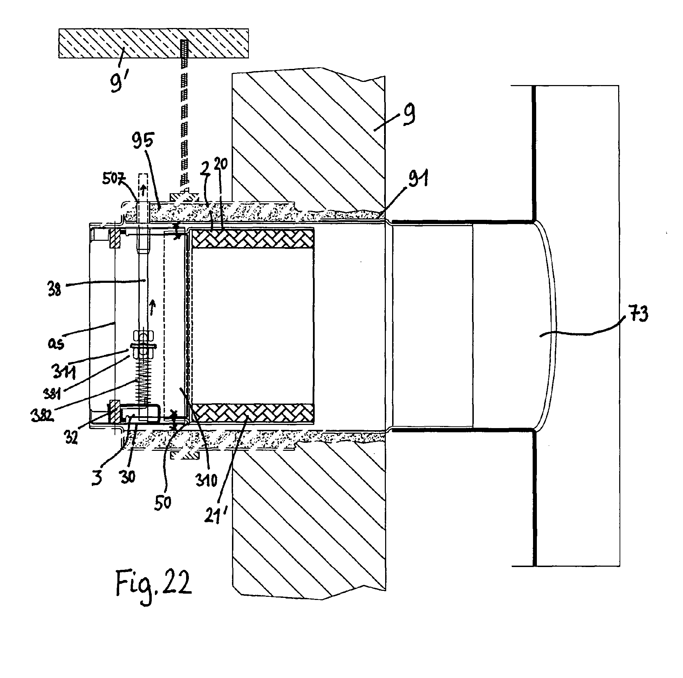

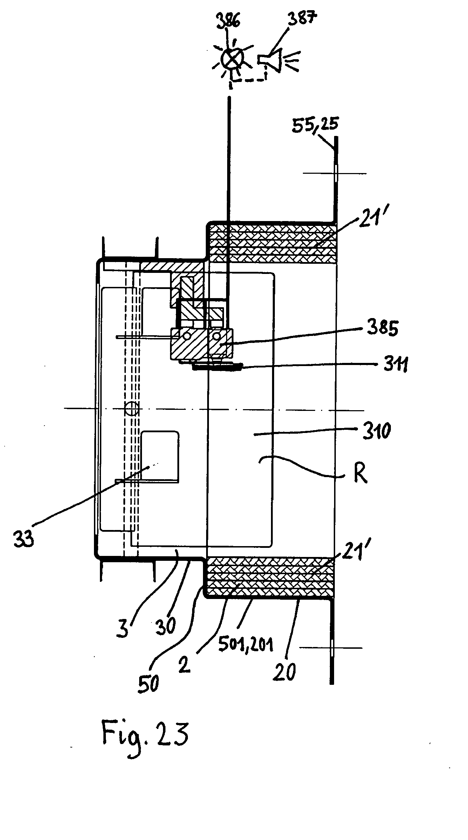

Schließlich zeigen die Fig. 20 bis 23 eine Brandschutz-Einrichtung gemäß der Erfindung mit Klappenstellungs-Indikator, und zwar die Fig. 20 eine derartige Einrichtung mit rundem Querschnitt und einem federkraftbeaufschlagten Indikatorstift, die Fig. 21 eine derartige Einrichtung mit einem besonders einfach gebauten Indikator-Stift, die Fig. 22 eine weitere Brandschutz-Einrichtung mit mechanischer Klappenstellungs-Indikation und die Fig. 23 eine derartige Einrichtung mit elektrischer Auslösung einer Warneinrichtung.

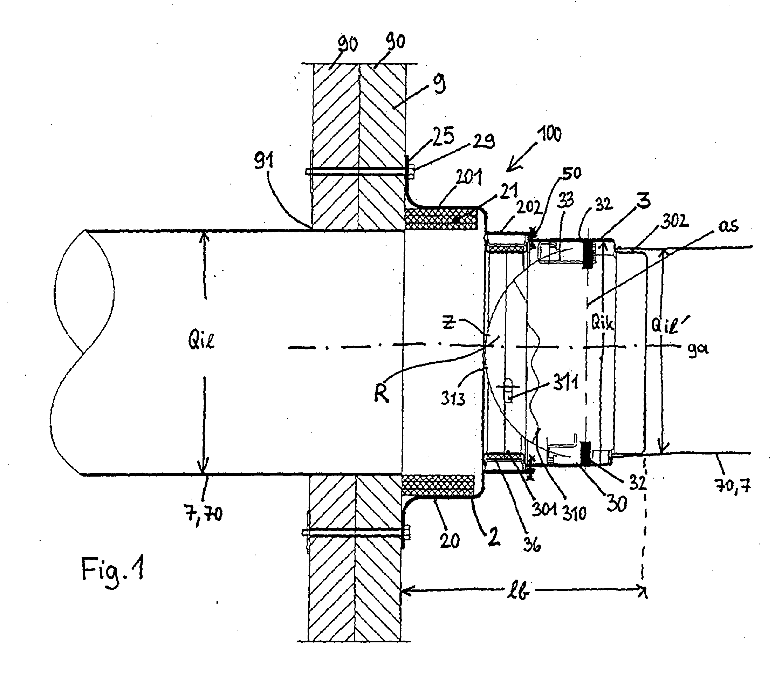

Bei der in der Fig. 1 gezeigten Brandschutz-Einrichtung 100 ist mittels einer umlaufend wegragenden Montagerosette 25 ihres Gehäuses bzw. Gehäuseteils 20 die Brandschutzmanschette 2 an einer mit einer Doppellage von Gipskarton-, Ridurit-Platten 90 od. dgl. gebildeten Leichtbau-Trennwand 9, z.B. mittels Federklappdübeln 29 befestigt.

In einer an die Montagerosette 25 anschließenden Erweiterung 201 des Gehäuses bzw. Gehäuseteils 20 ist ein aus einem in mehreren Lagen spiralig aufgewickelten Brandschutzlaminat-Band gefertigter Brandschutzlaminat-Körper 21 eingelegt, welcher einen dem Innenquerschnitt Qil der an die neue Brandschutz-Einrichtung 100 beidseitig anschließenden Rohrleitungen 7 mit einem von der linken Seite nur durch die Wand-Durchsetzungsöffnung 91 und nicht in den Laminatkörper 21 hineinragenden, aus Blech gefertigten Rohr 70 entsprechenden Innenquerschnitt Qil freilässt.

In einem anschließenden, weniger weiten Stutzenteil 202 des Brandschutzklappen-Gehäuses 20 ist hier mittels [-Querschnitt-Dichtring 36 gesichert, mit einem entsprechenden Anschlussabschnitt 301, das hier noch gesonderte, aber mit dem Gehäuse 20 durch Nietung od. dgl. verbundene Gehäuse 30 einer an sich bekannten Brandschutzklappe 3 angeordnet. In dem Gehäuse 20 sind auf jeweils diametral zueinander gegenüberliegend angeordneten Lagern 32 die beiden etwa halbkreisförmigen Klappenplattenflügel 310 gelagert, welche in ihrer Ruhestellung R beide mittels Schmelzsicherungselements 311 parallel zueinander in einer Lage in Richtung der Gehäuseachse ga aneinander gehalten positioniert sind. Diese beiden Klappenplattenflügel 310 stehen unter permanenter hoher Kraftbeaufschlagung durch eine Klappenbetätigungs-Feder 33.

Kommt es im Brandfall zum Schmelzen des Schmelzsicherungselements 311, so werden die beiden Klappenplattenflügel 310 mit der nun freiwerdenden hohen Kraft der gespannten Feder 33 - sich jeweils um die Klappenachse as drehend - äußerst schnell aufgeklappt und bilden dann miteinander eine den Innenquerschnitt Qik des Brandschutzklappen-Gehäuses 30 voll ausfüllende bzw. deckende, senkrecht zur Gehäuseachse ga ausgerichtete, letztlich kreisförmige, jeglichen Durchgang sperrende, Klappenplatte.

Zu sehen ist in der Fig. 1 noch eine Stutzenzone 302 am Brandschutzklappen-Gehäuse 30, welche für den Anschluss eines hier nur schematisch angedeuteten Rohres 70 einer Rohrleitung 7 mit Rohr-Innen-Querschnitt Qil' dient.

Die erfindungsgemäße Brandschutz-Einrichtung 100 gemäß der Fig. 1 weist eine noch relativ große Baulänge Ib auf.

Wichtig für diese Ausführungsvariante der Erfindung ist das Merkmal der außerhalb der Wand 9 und eben nahe zur Wanddurchsetzungs-Öffnung 90 an der Wand 9 montierten Brandschutzmanschette 25.

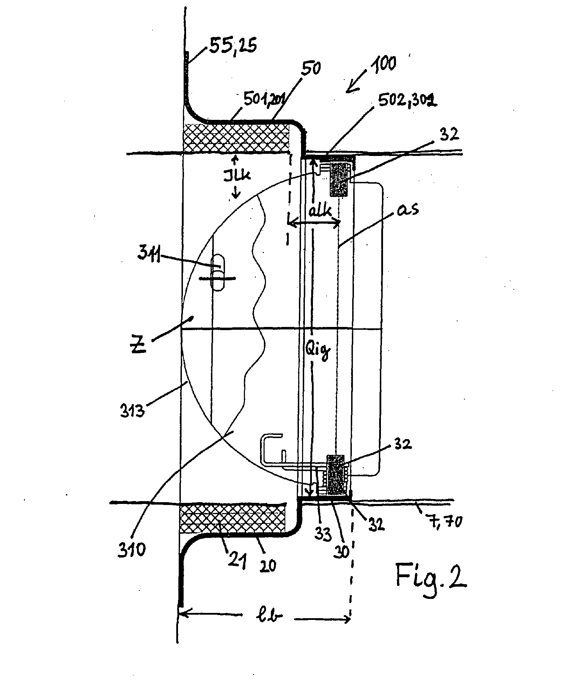

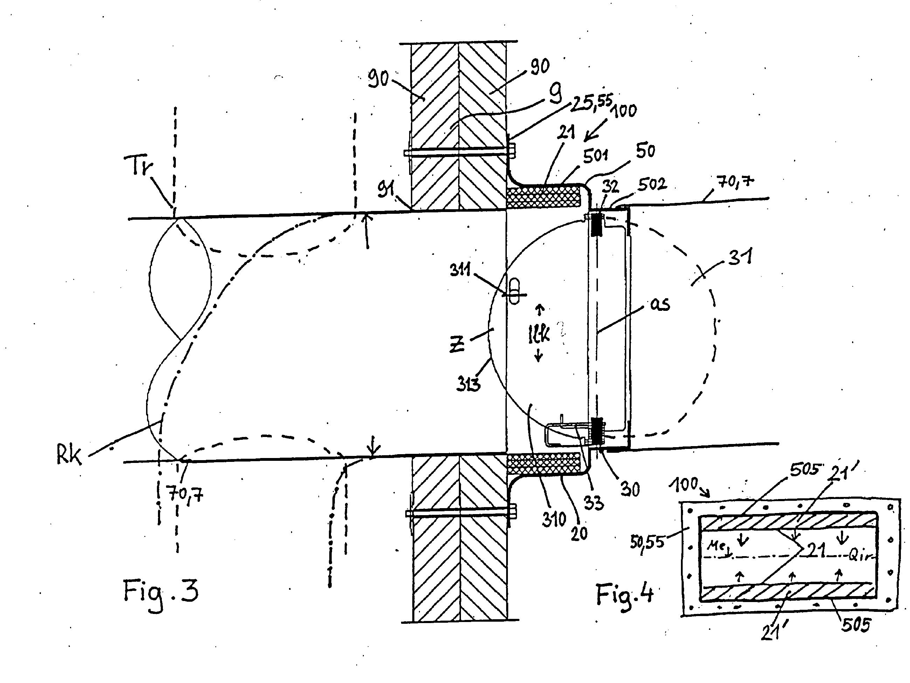

Die beiden in den Fig. 2 und 3 - bei sonst gleichbleibenden Bezugszeichenbedeutungen - gezeigten Brandschutzeinrichtungen 100 gemäß der Erfindung zeichnen sich durch eine vergleichsweise um fast 50%, also eklatant verringerte Baulänge Ib auf. Diese besonders bevorzugten Ausbildungsform der neuen Brandschutzeinrichtung 100 weist ein gemeinsames Gesamt- bzw. Kompaktgehäuse 50 mit einem die angeformte Montagerosette 55, 25 umfassenden Erweiterungsteil 501, 201 für die Anordnung des Brandschutzlaminat-Körpers 21 in seinem Inneren und einem engeren, gleich für den Anschluss einer weiterführenden Rohrleitung 7 ausgebildeten Stutzenteil 502, 302 mit Innen-Querschnitt Qig auf, in welchem die Lager 32 für die beiden Brandschutz-Klappenplattenflügel 310 sowie für die Spannfeder 33 für deren sofortige Auseinander-Klappung in Sperrstellung im Brandfall angeordnet sind.

Die durch die Lage der Lager 32 der Klappenplattenflügel 310 definierte Klappenplatten-Schwenkachse as derselben ist in so knappem Abstand alk von der in den Fig. 2 und 3 rechten Flanke des Brandschutzlaminat-Körpers 21 entfernt, dass die beiden Klappenplattenflügel 310 im Ruhezustand R mit dem "Zenit" Z ihres Außenrandes 313 so weit in den offenen Freiraum Ilk des Brandschutzlaminat-Körpers 21 hineinragt, dass der Zenit Z der beiden in der Fig. 2 gezeigten Klappenplattenflügel 310 mit der linksseitigen Flankenkontur des Brandschutzlaminat-Körpers 21 gerade etwa übereinstimmend positioniert ist, während bei der Brandschutz-Einrichtung der Fig. 3 die beiden Klappenflügel 310 durch den eben beschriebenen Innenraum IIk sogar hindurchragen und mit ihrem Zenit Z linksseitig noch über die dortige Laminatkörper-Kontur praktisch schon in das Gebiet der Wand-Durchsetzungsöffnung 91 und in das dort von links her eingesetzte Rohr 70 hineinragen.

Aus den Darstellungen der Fig. 2 und 3 wird - insbesondere beim Vergleich mit der in der Fig. 1 dargestellten neuen Brandschutz-Einrichtung - klar, wie viel Platz gleich im Nahbereich der Durchsetzungsöffnung 91 durch die erfindungsgemäß in dieser Ausbildungsform praktisch etwa nur eine "halbe" Baulänge beanspruchende, ein, insbesondere einstückiges Gesamt-Gehäuse 50 aufweisende Kompakt- Brandschutz-Einrichtung 100 gewonnen ist. Infolge der hier einstückigen, kompakten Ausführungsform des Gehäuses 50 ist weiters der wesentliche Vorteil gegeben, dass ein irrtümlicher, also etwa ein "verkehrter" Einbau mit hoher Sicherheit verhindert ist, wie er bei gesonderten, insgesamt eine Brandschutzeinrichtung bildenden Brandschutz-Einzelkomponenten mit getrennten Gehäusen nicht mit voller Sicherheit auszuschließen ist.

In der Fig. 3 ist - bei sonst gleichbleibenden Bezugszeichen-Bedeutungen - jeweils mit unterbrochenen und mit Strichpunkt-Linien angedeutet, wie gleich auf der rechten Seite der Wand-Durchlassöffnung 91, also sehr nahe zur Wand 90 ein T-Stück Tr der Rohrleitung oder ein Rohrkrümmer Rk angeordnet sein kann.

Angedeutet durch unterbrochene Linien ist in der Fig. 3 noch eine "ganze", also kreisrunde ungeteilte Klappenplatte 31, welche im Brandfall durch die Kraft der Feder 33 in die Sperrstellung senkrecht zur Gehäuseachse ga verschwenkbar ist.

Die Fig. 4 zeigt - bei sonst gleichbleibenden Bezugszeichen-Bedeutungen - schematisch einen Ausschnitt aus einem Gesamt- bzw. Kompakt-Gehäuse 50 mit Rechteck-Innen-Querschnitt Qir für Rohrleitungssysteme mit Rechteck-Rohren und zwar den Erweiterungsteil 501 des Gehäuses 50, wo der Brandschutz-Laminatkörper 21 hier in Form von zwei Teil-Laminatkörpern 21' vorliegt, welche an den beiden einander gegenüberliegenden Wandungen 505 des rechteckigen Querschnitt aufweisenden gemeinsamen Gehäuses 50 anliegen. Im Brandfall wachsen die beiden Teil-Laminatkörper 21, wie durch Pfeile angedeutet, in Richtung auf einander zu zur Mittelebene Me des Gehäuses 50 hin und sperren den Recheck-Innen-Querschnitt hochwirksam völlig.

Die Fig. 5a und 5b zeigen - bei sonst gleichbleibenden Bezugszeichen-Bedeutungen - eine erfindungsgemäße Brandschutz-Einrichtung 100, welche auf der Brandgefährdungs-Seite Bs einer mit zwei Lagen von Gipskartonplatten 90 od. dgl. gebildeten Trennwand 9, und zwar anschließend an eine diese Wand 9 durchsetzende Durchführungsöffnung 91 für eine Rohrleitung 7 mit Rohren 70 angeordnet ist.

Die neue Brandschutzeinrichtung 100 umfasst eine Brandschutzklappe 3, an deren Gehäuse 30 über für den Ausgleich der Längsausdehnung durch die Hitze im Brandfall vorgesehene flexible Rohrabschnitte 71 einer Be- oder Entlüftungsleitung 7 od. dgl. mit ihren Rohren 70 angeschlossen ist. Die Rohrleitungen 7 und das bzw. der Gehäuse bzw. Gehäuseteil 30 der Brandschutzklappe 3 sind hier von einem, über eine Haltestange 81 an einer Wand 9 oder Decke 9' befestigten Haltering 82 gehalten. Im Inneren des Gehäuses bzw. Gehäuseteils 30 der Brandschutzklappe 3 befindet sich, auf Lagern 32 gelagert eine um die Schwenkachse as um 90° in eine Position in Richtung zum Betrachter hin drehverschwenkbare, kreisförmige Brandschutz-Klappenplatte 31, welche von einer außerhalb des Gehäuses 30 angeordneten Handauslöseeinrichtung 330 unter permanenter Kraftbeaufschlagung mittels der Auslösefeder 33 im Brandfall aus der gezeigten Position in eine zum Betrachter hin und somit aus der Richtung des Luft-Stromes Ls der von links nach rechts oder umgekehrt bzw. von oben nach unten hin oder umgekehrt durch die Rohrleitung 7, 70 geförderten Luft bzw. Abluft sofort in eine den kreisrunden Innen-Querschnitt Qi des Brandschutzklappen-Gehäuses bzw. -Gehäuseteils 30 und damit jede weitere Förderung von Luft bzw. Abluft voll sperrenden und somit auch die Ausbreitung von Feuer, Brandgasen und Brandrauch hemmende Sperr-Position quer zum Luft- bzw. Abluftstrom Ls klappbar ist.

Zur Trennwand 9 hin schließt sich an das Brandschutzklappen-Gehäuse 30 das mit dem selben zu einer Einheit verbundene Gehäuse 20 einer im Rahmen der Erfindung liegenden "Weitrohr"-Brandschutzmanschette 2 an. In der Fig. 5a ist angedeutet, wie in der der Wanddurchführung 91 nahen Erweiterung 201 des Manschetten-Gehäuseteils 20 das bei Hitzeeinwirkung im Brandfall äußerst schnell intumeszierende Brandschutzlaminat 21 untergebracht ist, welches hier nach Art eines mehrlagigen, spiralig aufgewickelten Bandes als Toroid-Körper ausgebildet ist und während der Volums-Expansion im Brandfall von allen Seiten in Richtung radial nach innen zur Gehäuseachse ga hin "wächst", wie insbesondere in Fig. 5a und 5b durch Pfeile angedeutet.

Ab einer höheren inneren Weite, vorzugsweise ab einem Innen-Durchmesser des Brandschutzmanschetten-Gehäuseteils 20 von über 150 mm, findet im Brandfall, wie gewünscht, zwar die erwünschte rapide Volumsexpansion des Brandschutzlaminats 21 statt, allerdings kommt es hierbei dazu, dass zumindest in einer Anfangsphase das Volumen desselben auf der Brand-Einwirkungsseite Bs wesentlich rascher "wächst" als auf der "kalten" Seite Ks. Diese unterschiedliche Volumsexpansion auf den beiden Seiten des Laminat21 führt - wenn keine Gegenmaßnahmen ergriffen werden - dazu, dass bei den größeren Rohr-Nennweiten das Brandschutzlaminat 21 sich sozusagen selber zur "kalten" Seite hin verdrängt und dabei letztlich völlig zerstört wird, womit die gewünschte Brandausbreitungs-Sperrwirkung verloren ist.

Um dies zu vermeiden, sind die als Laminat-Führungselemente 4 vorgesehenen, den freien Innen-Querschnitt Qig des Brandschutzmanschetten-Gehäuses bzw. - Gehäuseteils 30 durchquerenden, zueinander senkrecht angeordneten und mit ihren freien Enden mittels Muttern 411 von außen am Gehäuse 30 befestigten Führungsstäbe 41 vorgesehen, welche den Brandschutzlaminat-Körper 21 durchsetzen, und entlang derer, von denselben geführt, die im Brandfall rasch expandierende Laminatmasse 21 nach innen hin zur Gehäuseachse ga wachsen kann und mit hoher Effektivität an einem seitlichen Ausweichen oder Herausquellen gehindert wird.

Der hier Toroidform aufweisende Brandschutz-Laminatkörper 21 ist in einer Gehäuse-Erweiterung 501, 201, dort innenseitig anliegend, untergebracht. An diese Gehäuse-Erweiterung 501, 201 angeformt ist hier eine rundum radial nach außen ragende Montagerosette 55, 25, mittels welcher das Gehäuse 30 z.B. mittels Schraubdübeln 29, die Durchgangsöffnung 91 fortsetzend, an der Wand 9 befestigt ist.

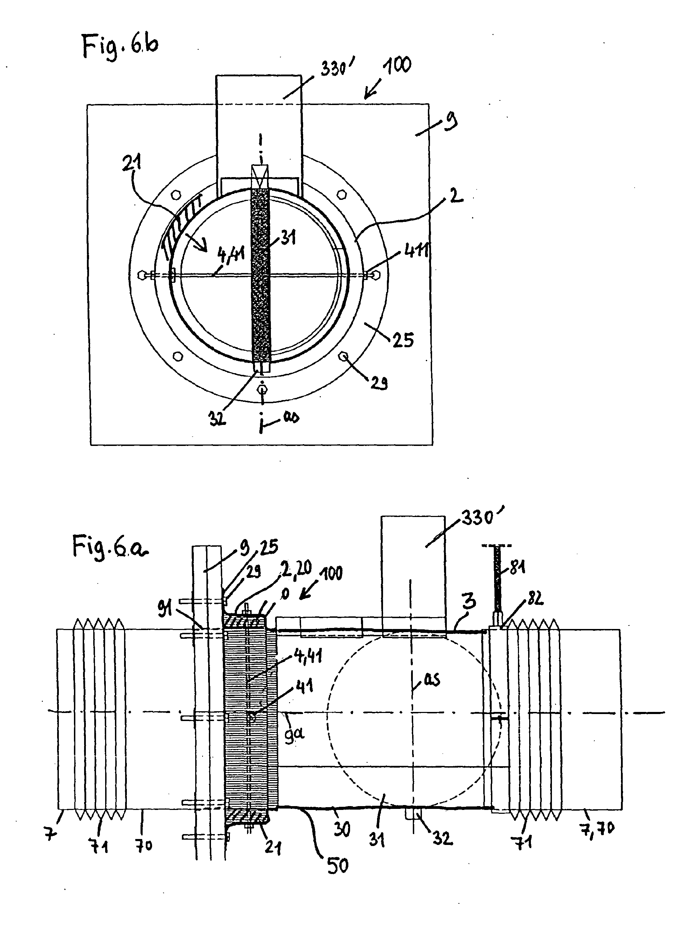

Die Fig. 6a und 6b zeigen - bei sonst gleichbleibenden Bezugszeichenbedeutungen - eine zu der in den Fig. 5a und 5b gezeigten Brandschutzeinrichtung 100 praktisch völlig identische Brandschutzreinrichtung 100, abgesehen davon, dass bei dieser an der Außenseite des Brandschutzklappen-Gehäuses bzw. -Gehäuseteils 30 anstelle einer Handbetätigung bzw. Federbeaufschlagung ein an sich bekannter Brandschutzklappen-Schließmotor 330' angeordnet ist.

Bei den beiden in der Fig. 5a und 5b sowie 6a und 6b gezeigten BrandschutzEinrichtungen 100 sind die Brandschutzklappen 3 und ihre Klappenplatten 31 u.a. wegen der dort angeordneten, relativ viel Platz beanspruchenden Betätigungs-Mechanik 330, 330' relativ weit von der gegen Brand-Durchbruch abzuschottenden Wanddurchführungsöffnung 91 in der Trennwand 9 und somit auch von der an dieser unmittelbar befestigten angeordneten Brandschutzmanschette 2 angeordnet.

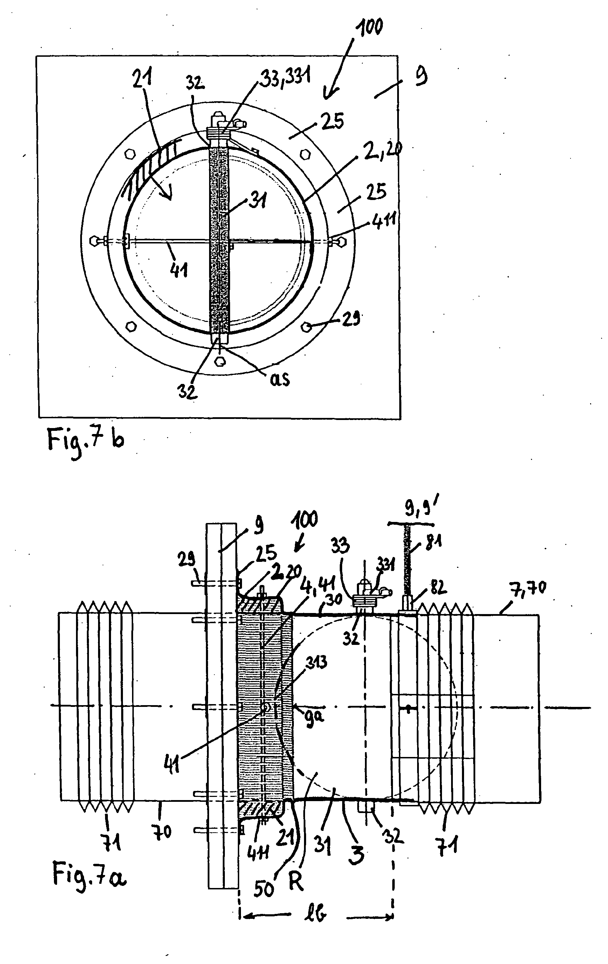

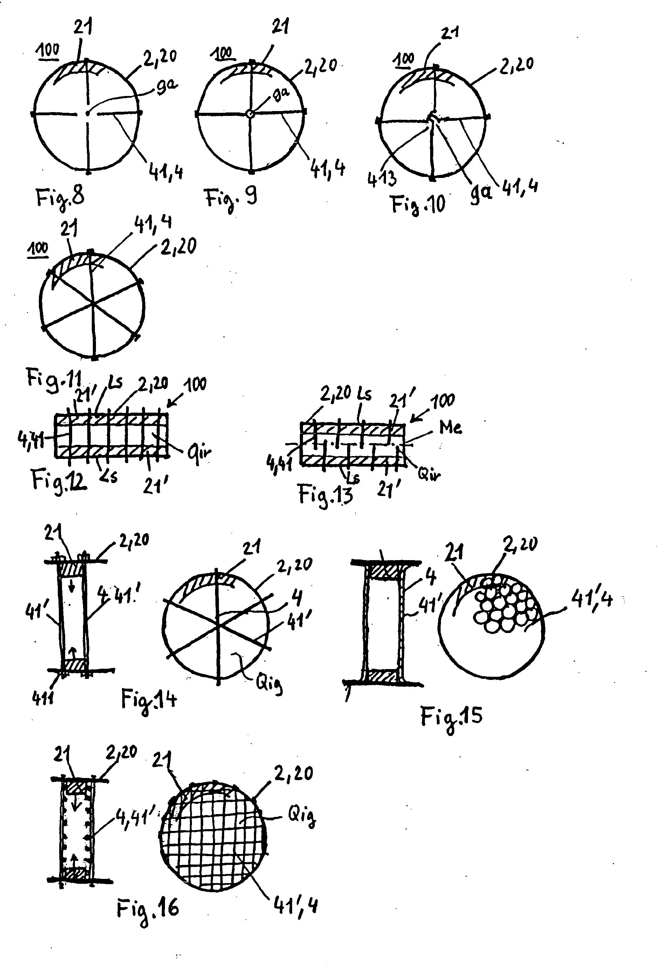

Die Fig. 7a und 7b hingegen zeigen - bei sonst gleichbleibenden Bezugszeichenbedeutungen - eine sich durch besonders knappe und kompakte Bauweise und geringe Baulänge Ib auszeichnende Brandschutz-Einrichtung 100 gemäß der Erfindung:

Es ist dort eine mittels Schmelzsicherungselement 311 in der Ruhestellung R gesicherte, für das rapide Schwenken in die Sperrstellung im Brandfall mittels kräftiger Feder 33 gespannte Klappenplatte 31 vorgesehen. Die Fig. 7a zeigt, dass nun die im Gehäuseteil 30 auf den Lagern 32 - der Schwenkachse as entsprechend - gelagerte Klappenplatte 31 in ihrer Nicht-Funktions- bzw. Ruhestellung R so nahe an die mit den Laminat-Führungsstäben 4 ausgestattete Brandschutzmanschette 2 herangerückt ist, dass diese Platte 31 mit ihrem linksseitigen Bogenrand 313 in den vom Brandschutzlaminat 21 umschlossenen Raum hineinragt und zwar so weit, dass sie bzw. deren Rand von den durchgehenden Laminat-Führungsstäben 41 nur wenig beabstandet ist. Diese Konstellation ermöglicht bei voller Erhaltung einer maximalen Abschott-Effektivität im Brandfall eine besonders platzsparend geringe Baulänge Ib der neuen Brandschutz-Einrichtung 100.

In den Fig. 8 bis 11 sind - bei sonst gleichbleibenden Bezugszeichenbedeutungen - schematisch verschiedene Arten der Anordnung und Ausführung der Laminat-Führungselemente 4 in der Brandschutzmanschette 2 der erfindungsgemäß ausgebildeten Brandschutz-Einrichtung 100 gezeigt:

Die Fig. 8 zeigt vier radial nach innen zur Gehäuseachse ga hin ragende, dort vor Erreichung derselben frei endende Laminat-Führungsstäbe 41, wobei die Enden derselben voneinander beabstandet sind.

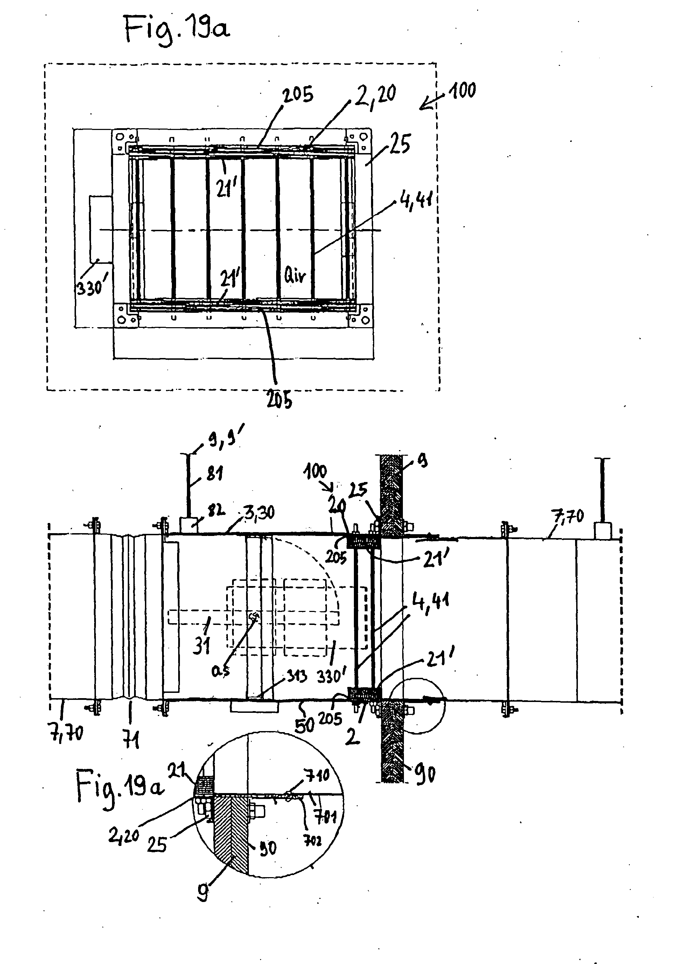

Die Fig. 9 zeigt vier radial nach innen zur Gehäuseachse ga hin ragende, jedoch mittig miteinander verschweißte Laminat-Führungsstäbe 41.

Die Fig. 10 zeigt zwei jeweils durchgehende, zueinander senkrecht angeordnete Laminat-Führungsstäbe 41, welche in ein- und derselben geometrischen Ebene senkrecht zur Gehäuseachse ga angeordnet sind und im Bereich derselben einander ausweichende Ausbuchtungen 413 aufweisen. Sie können dort vorsorglich miteinander verschweißt sein, was die Stabilität weiter erhöht.

Die Fig. 11 zeigt eine Laminatführung mit insgesamt sechs - im Winkelabstand von jeweils 60° voneinander - vom Gehäuse 20 aus nach innen hin ragenden Laminat-Führungsstäben 41, wobei sich eine höhere Zahl an Stäben insbesondere dann als günstig erweist, wenn höhere Innen-Querschnittsweiten der Rohre und Komponenten im jeweiligen Be- und Entlüftungssystem vorgesehen sind.

In den Fig. 12 und 13 sind - bei sonst gleichbleibenden Bezugszeichenbedeutungen - erfindungsgemäße Brandschutzeinrichtungen 100 mit Rechteck-Innenquerschnitt Qir gezeigt, und zwar zeigt die Fig. 12 von Längsseite Ls zu gegenüber liegender Längsseite Ls des Innenquerschnitts Qir reichende, den rechteckigen Innenquerschnitt Qir vollkommen durchsetzende, voneinander beabstandete Laminat-Führungsstäbe 41 und die Fig. 13 eine Ausführungsform, bei welcher voneinander seitlich beabstandet angeordnete, frei endende Führungsstäbe 41 abwechselnd seitlich gegeneinander versetzt, einmal von oben und einmal von unten zur Mittelebene Me hin ragen.

Die Fig. 14 bis 16 zeigen - bei sonst gleichbleibenden Bezugszeichenbedeutungen - schematisch die zweite, grundsätzliche Art der Ausbildung der Laminat-Führungselemente 4 gemäß der Erfindung:

Gemäß Fig. 14 ist hier das Brandschutzlaminat 21 im Branschutzmanschetten-Gehäuse(teil) 20 zwischen zwei das Laminat beidseitig flankierenden, in den freien kreisrunden Innen-Querschnitt Qig des Gehäuses 20 käfigwand-artig radial nach innen ragenden (Gleit-)Führungsstiften 41' od. dgl. angeordnet, welche hier das Laminat 21 jedoch nicht durchsetzen, sondern jeweils - dasselbe beidseitig flankierend - seitlich an demselben anliegen und es beim Aufblähen im Brandfall begrenzen.

Die Fig. 15 zeigt, wie die beiden, das Laminat 21 seitlich flankierenden Führungselemente 4', als grobmaschige Siebplatte 41' ausgebildet sein können, und die Fig. 16 zeigt eine Ausbildungsform, bei der die den Brandschutzlaminat-Körper 21 beidseitig flankierenden Laminat-Führungselemente 4' in Form zweier weitmaschiger Drahtnetze 41' od. dgl. vorliegen.

Es soll an dieser Stelle betont werden, dass die hier vorher besprochenen Figuren nur einige der möglichen Ausführungsformen der Laminat-Führungselemente 4 gemäß der Erfindung zeigen.

Die Fig. 17a bis 17c sowie 18a und 18c und 19a bis 19c zeigen - bei sonst gleichbleibenden Bezugszeichenbedeutungen - jeweils in Ansichten von vorne und in Schnittansichten von der Seite, eine erfindungsgemäße Brandschutzeinrichtung 100 für Rohrleitungssysteme 7 mit Rohren 70 mit Rechteckform aufweisendem Innenquerschnitt Qir. In dem Gehäuse bzw. Gehäuseteil 20 der Brandschutzmanschette 2 mit einer der - wie in den Figuren 5 bis 7 gezeigten - Montagerosette entsprechenden Wandbefestigungs-Umrandung 25, sind entlang der beiden breiteren, einander gegenüber liegenden Gehäusewände 205 die beiden Teilkörper 21' des Brandschutzlaminates 21 anliegend angeordnet. Die Laminat-Teilkörper 21' sind von - hier sieben - sich zwischen den genannten Gehäusewänden 205 erstreckenden Laminat-Führungsstäben 41 durchsetzt.

Die Führungsstäbe 41, zueinander zick-zack-artig versetzt, in zwei voneinander beabstandeten geometrischen Ebenen angeordnet.

Die Fig. 17a und 19a zeigen, wie dort links von der zu durchsetzenden Wand 9 zwischen der Rohrleitung 7 bzw. den sie bildenden Rohren 70 und dem mit einer Halterungsstange 81 und dem Haltering 82 an einer Decke 9' od. dgl. gehalterten Gehäuse 30 der Brandschutzklappe 3 ein elastisch nachgiebiges Flex-Rohr 71 als Dehnungsausgleichselement angeordnet ist. Bei der Einrichtung 100 gemäß Fig. 18a sind zwei derartige Elemente 71 vorgesehen.

Rechts von der Wand 9 ist für den Wärmedehnungs-Ausgleich im Brandfall eine Ineinanderschiebe-Kombination von zwei mittels Einwirkung der Hitze wegschmelzenden Kunststoffnieten 710 miteinander verbundenen Rohrstücken 701, 702 vorgesehen, wie in der Detailzeichnung 17c deutlicher gezeigt.

Bei der in Fig. 20 - bei sonst gleich bleibenden Bezugszeichen-Bedeutungen - gezeigten Brandschutz-Einrichtung 100 sind an- bzw. einbau-fertig in einem material-integralen gemeinsamen Gehäuse 50 mit Rosette 55, 25 und Erweiterungsteil 501, 201 der mit Führungsstiften 41 ausgestattete Brandschutz-Laminatkörper 21 und die Brandschutzklappe 3 mit ihren beiden mittels Feder(n) 33 dauer-kraftbeaufschlagten Klappenplattenflügeln 310 untergebracht.

Die beiden Klappenplattenflügel 310 werden mittels eines bzw. einer Schmelzsicherungs-Ringes, -Joches 311, -Klammer od. dgl. mit Innenöffnung 312, welcher bzw. welches bzw. welche mit von den beiden Klappenplattenflügeln 310 wegragenden Halteelementen, insbesondere Haltehaken 313 gehalten wird, in der zueinander etwa parallelen Luftdurchgangs- bzw. Ruhe-Stellung R gehalten.

Das Haltejoch 311 od. dgl. ist entweder selbst aus einem leicht, vorzugsweise unter 100°C, schmelzenden Material, insbesondere Metall bzw. Lotmetall, gebildet, oder aber es besteht aus zwei Teilen, welche mit einem derartigen Material, insbedondere Metall, aneinander gebunden, insbesondere gelötet sind.

Die Innenöffnung 312 des Haltejochs 311 od. dgl. ist von dem Indikator-Stift 38 - einfachsten Fall z.B. ein Schraubschaft - durchsetzt, welcher beidseitig des Haltejoches 311 od. dgl. hier in richtiger Position angeordnete Schraubmuttern 381 aufweist, mit einer die Größe der Innenöffnung 312 des Haltejoches 311 od. dgl. übersteigenden Größe. Der Stift 38 durchsetzt - hier nach unten hin - das Brandschutz-Laminat 21 im Erweiterungsteil 501, 201 des Gehäuses 50 bzw. Gehäuseteils 20 und ragt durch eine dessen lockeren Sitz garantierende Öffnung 507 aus demselben nach unten hin hinaus. Der Stift 38 weist außerdem eine ihn im Unterteil umgebende, unter Spannung stehende Spiralfeder 382 auf, welche sich einerseits innen am Brandschutzlaminat 21 und andererseits an einer weiteren, am genannten Stift 38 angeordneten Mutter 383 im Abstand von Laminat 21 abstützt.

Wenn nun im Brandfall das Haltejoch 311 od. dgl. schmilzt bzw. desintegriert, kann es den Indikatorstift 38 nicht mehr in Lage halten und derselbe wird durch die Kraft der Spiralfeder 382 sofort nach oben gedrückt und es verschwindet sofort der vorher aus dem Gehäuse 50 nach unten herausragende Indikatorschaft-Teil in demselben und zeigt so auf diese klare, unzweideutige Weise das Umklappen der beiden Klappenflügel 310 in die Sperrstellung an. Mit 74 ist in Fig. 20 noch eine Lippendichtung am Stutzenteil 502, 202 des Gehäuses bezeichnet.

Die Einrichtung gemäß der Fig. 20 hat den Vorteil, dass sie unabhängig von der Positionierung des Indikator-Schaftes 31 in jeder Winkelstellung funktioniert.

Die einen Rechteck- oder Quadrat-Innenquerschnitt aufweisende Brandschutz-Indikationseinrichtung 100 gemäß Fig. 21 zeigt - bei sonst gleichbleibenden Bezugszeichen-Bedeutungen - eine zur Brandschutz-Einrichtung gemäß Fig. 20 ähnliche Brandschutz-Einrichtung 100 mit einem anderen, noch einfacheren Klappenstellungs-Indikator.

Derselbe ist hier ebenfalls mit einem Indikator-Stift 38 gebildet, wobei derselbe hier etwa von seinem unteren Ende her mit je einer Schraubmutter 381 unterhalb und oberhalb des mit einem leicht schmelzenden Material, insbesondere Lotmetall, gebildeten bzw. zusammengefügten Schmelzsicherungs- bzw. Haltejochs 311 od. dgl. - welches die beiden federbelasteten Klappenflügel 310 in der Ruhestellung R hält - gehalten wird und nach oben ragend, durch die für die Durchsetzung mit dem Indikator-Stift 38 vorgesehene Öffnung 507 in dem Brandschutz-Laminat 21' und im dasselbe enthaltenden Gehäuseteil 20 des Gehäuses 50 hindurch klar sichtbar über denselben bzw. dasselbe nach oben ragt.

Wenn nun im Brandfall das die Klappenflügel 310 in der gezeigten Ruheposition R haltende Schmelzsicherungs-Joch 311 od. dgl. schmilzt oder desintegriert und die Klappenflügel 310 sofort in die Sperrstellung um- bzw. ausklappen, so fällt der Indikator-Stift 38 infolge seiner Eigenschwere sofort voll nach abwärts in das Gehäuse 50 und das in Ruhestellung nach oben herausragende Stück des Stiftes 38 "verschwindet" im Gehäuse 50, womit nach außen hin deutlich die Sperrstellung der Brandschutzklappe 3 angezeigt wird.

In gleicher Weise kann der Indikator-Stift 38 sozusagen am Schmelzsicherungs-Joch 311 od. dgl. "hängen" und beim Schmelzen im Brandfall abwärts fallen und unter Anzeige der Sperrstellung durch eine untere Öffnung 507 im Gehäuse 50 dann nach abwärts hinaus ragen.

Die soeben beschriebene, ebenfalls rein mechanische Ausbildungsform ist besonders einfach gebaut, sie funktioniert allerdings gut nur mit einem etwa senkrecht positionierten und beweglichen Indikator-Stift.

Analog zu der in der Fig. 21 gezeigten Anordnung funktioniert die Brandschutz-Einrichtung 100, welche - bei sonst gleichbleibenden Bezugszeichen-Bedeutungen - die Fig. 22 zeigt:

Es ist dort nicht ein runden Innen-Querschnitt aufeisendes und, an die zu durchsetzende Wand 9 mittels Flansch, Wandrosette od. dgl. zu montierendes Gehäuse 50 mit in einer Erweiterung 501 desselben untergebrachtem Brandschutz-Laminat 21' und Brandschutzklappe 3 gezeigt, sondern ein im wesentlichen einheitlichen quadratischen oder rechteckigen Innen-Querschnitt Qir aufweisendes, zu einem einbaufertigen Modul aus zwei miteinander, z.B. mittels Nieten, verbundenes Gehäuseteilen 20, 30 zusammengesetztes Gesamt- bzw. Kompakt-Gehäuse 50, wobei hier das Brandschutz-Laminat 21' zum Teil in die Wanddurchsetzungsöffnung 91 hineinreicht. Vorsorglich kann hier eine an eine Decke 9' gebundene, vorstehende äußere Brandschutz-Verkleidung 95, angedeutet durch unterbrochene Linien, vorgesehen sein. Der hier das Gehäuse 30 der Brandschutzklappe 3 durchdringende Indikator-Stift 38 ist hier praktisch in gleicher Weise ausgebildet, wie der in den Fig. 20 gezeigte federkraft-beaufschlagte Indikator-Stift 38.

Rechts schließt an das Durchsetzungsrohr in der Wandöffnung 91 eine T-RohrAbzweigung 73 an.

Bei der Brandschutz-Einrichtung gemäß Fig. 23 ist bzw. sind - bei sonst gleichbleibenden Bezugszeichen-Bedeutungen - ebenfalls in einem gemeinsamen material-integralen Gesamt- bzw. Kompakt-Gehäuse 50 mit Quadrat- bzw. Rechteck-Innen-Querschnitt Qir und Montagerosette 55 und Gehäuse-Erweiterung 501 das Brandschutz-Laminat 21 bzw. dessen beide Teilkörper 21' und die Brandschutzklappe 3 mit ihren hier rechteckigen Klappenflügeln 310 untergebracht.

Wieder sind diese Klappenflügel 310 mittels Schmelzsicherungs-Joch 311 od. dgl., das in entsprechende von den Flügeln 310 wegstehende Haken eingehängt ist, in der den Luft-Durchgang praktisch nicht behindernden Ruhestellung R gehalten.

Während dieser Zeit drückt das Halte-Joch 311 kontinuierlich auf die Taste eines Mikroschalters 385, wodurch dort z.B. permanent ein Stromfluss unterbrochen ist.

In dem Moment, in welchem im Brandfall das Schmelzsicherungs-Joch 311 desintegriert und die beiden Klappenflügel 310 in die Luftdurchgangs-Sperrstellung umschnappen, ist die Mikro-Taste des Mikroschalters 385 nicht mehr niedergedrückt, es fließt nun Strom und sofort wird bzw. werden z.B. eine Warnleuchte 386, eine Ton-Sirene 387 oder gegebenenfalls beide genannten Warneinheiten gleichzeitig eingeschaltet.

In ganz analoger Weise kann z.B. vorgesehen sein, dass der gezeigte Mikroschalter 385 von einem der beiden sich in Ruhestellung R befindlichen Brandschutz-Klappenflügeln 310 selbst mechanisch niedergedrückt ist, und dieser Zustand sich in dem Augenblick ändert, wenn das dieselben in dieser Stellung haltende Schmelzsicherungs Joch 311 schmilzt und die beiden Klappenflügel 310 die vorher permanent niedergedrückte Taste augenblicklich freigebend und somit die Warneinheiten 386, 387 aktivierend, in die Sperrstellung umschnappen.

Es soll an dieser Stelle betont werden, dass grundsätzlich alle bekannten - durch ein Brandgeschehen - durch Wegfallen oder Wegschmelzen einer Schmelzsicherung od. dgl. und/oder durch die Umklapp-Bewegung der Brandschutz-Klappenflügel selbst aus der Ruhe- in die Sperrstellung ausgelösten bzw. auslösbaren mechanischen, elektrischen und/oder magnet-unterstützten Klappenstellungs-Indikator-Systeme, ob dieselben nun mit Berührung oder berührungslos arbeiten, für die erfindungsgemäße Brandschutz-Einrichtung in jeder Form in Frage kommen.

Im Anspruch 4 sind - keineswegs vollständig - einige wichtige und in Frage kommende Ausführungsformen von Sperrstellungs-Indikatoren für BrandschutzEinrichtungen angeführt.

## Patentansprüche

1. Brandschutz-Einrichtung für - Bauwerks-Trennelemente, Wände (9), Leichtbauwände oder Decken von Gebäuden, durchsetzende - Luft-Ver- und Abluft-Entsorgungsleitungen (7, 70), -führungen u. dgl., welche Einrichtung für die Hemmung der Ausbreitung von Feuer und Brandgasen und Brandrauch im Brandfall mindestens ein mechanisches Brandausbreitungs-Hemmelement aus der Gruppe Brandschutzklappe (3) und Brandschutzmanschette (2) mit in ihrem Inneren angeordnetem Brandschutz-Laminatkörper (21) aus einem bei Einwirkung von Hitze intumeszierenden Polymer-Material umfasst, **dadurch gekennzeichnet,**
**dass** das Gehäuse (20) der Brandschutzmanschette (2) und das Gehäuse (30) der Brandschutzklappe (3), und gegebenenfalls zusätzlich das Gehäuse einer Luft-Rückschlagklappe, entweder integral oder unterstützt durch Verbindungselemente aus der Gruppe Schrauben, Nieten, Verklebung od. dgl. miteinander zu einem fertig an- bzw. einbaufähigen Gesamt- bzw. Kompaktgehäuse (50) bzw. Brandschutz-Modul zusammengeschlossen sind.

2. Brandschutz-Einrichtung nach Anspruch 1, **dadurch gekennzeichnet, dass** das Gehäuse bzw. der Gehäuseteil (20) der an das durch die Brandschutzklappe (3) gebildete Brandschutzausbreitungs-Hemmorgan material-integral direkt anschließend mit ihm verbunden angeordneten Brandschutzmanschette (2) einen Erweiterungsabschnitt (201) aufweist, in welchem - im Falle eines (kreis)runden Innen-Querschnitts desselben - der im wesentlichen hohlzylinderartige Brandschutzlaminat-Körper (21) bzw. - im Falle eines rechteckigen bzw. quadratischen Innen-Querschnitts des Gehäuses bzw. Gehäuseteils (20) - die beiden Teilkörper (21') des Brandschutzlaminat-Körpers (21) angeordnet ist bzw. sind, und dass das bzw. der genannte Gehäuse bzw. Gehäuseteil (20) bzw. dessen Erweiterungsabschnitt (201) material-integral in eine von demselben radial bzw. allseitig nach außen gerichtete bzw. ragende Montage-Rosette (25), oder - Umrandung - für eine anliegende Befestigung der Brandschutzmanschette (2) bzw. von dessen Gehäuse bzw. Gehäuseteil (20) an der jeweiligen Wand (9), Leichtbauwand oder Decke (9') des Gebäudes, und zwar unmittelbar anschließend an eine Durchsetzungsöffnung (91) in derselben - übergehend ausgebildet ist.

3. Brandschutzeinrichtung nach Anspruch 1 oder 2,
**dadurch gekennzeichnet,**
- **dass** sie für Luft-Ver- und Abluft-Entsorgungsleitungen oder -führungen mit höheren Innen-Querschnittsweiten- bzw. -durchmessern, insbesondere von über 150 mm, vorgesehen ist,
- **dass** sie zusätzlich zu der in unmittelbarer Nähe oder im Abstand von der von der Rohrleitung (7, 70) durchsetzten Wand- bzw. Decken-Durchsetzungsöffnung (91) angeordneten - Brandschutzklappe (3) eine, bevorzugt mit ihrem Gehäuse bzw. Gehäuseteil (20) an das bzw. den Gehäuse bzw. Gehäuseteil (30) der Brandschutzklappe (3) unmittelbar anschließende bzw. mit demselben verbundene oder material-integrale, im Nahbereich der Durchsetzungsöffnung (91), an dieselbe unmittelbar anschließend angeordnete bzw. anordenbare, Brandschutzmanschette (2) mit in deren Gehäuse bzw. Gehäuseteil (20) angeordnetem hohlzylindrischem Brandschutz-Laminatkörper (21) bzw. voneinander beabstandet angeordneten Brandschutz-Laminat-Teilkörpern (21, 21') aus einem bei Einwirkung von Hitze intumeszierenden Polymermaterial umfasst,
- wobei der (die) Laminat(-Teil)körper (21, 21') bzw. die sich bei Einwirkung der Hitze im Brandfall aus demselben bzw. denselben bildende expandierende Polymermasse unter Verhinderung von Seit-Abweichungs- bzw. -Ausbauchungs-Deformation und Desintegration während der Expansion bzw. Intumeszenz entlang von - den Laminatkörper durchsetzenden oder aber denselben beidseitig seitlich flankierenden - vom Gehäuse bzw. Gehäuseteil (20) der Brandschutzmanschette (2) aus, zur Gehäuseachse (ga) oder zur Mittelebene (Me) desselben nach innen hin ragenden bzw. sich erstreckenden LaminatFührungselementen (4, 41) oder mittels in die Durchgangsöffnung des Laminatkörpers (21) eingezogenem Kunststoffrohr (410) führbar ist.

4. Brandschutz-Einrichtung nach Anspruch 1 oder 2, **dadurch gekennzeichnet,**
**dass** die Brandschutzklappe (3) mit einem bei Überschreitung der Ansprechtemperatur des die Brandschutzklappen-platte bzw. plattenflügel (31, 310) in einer den Durchgang durch die Rohrleitung (7,70) nicht behindernden Ruhe-Stellung (R) haltenden Schmelzelements (311) durch die durch dessen Schmelzen oder Desintegration bedingte, im Brandfall eintretende, schnelle Klappbewegung in die Durchgangs-Sperrstellung auslösbaren und die Erreichung der Sperrstellung der Klappenplatte (31) bzw. Klappenplattenflügel (31, 310) außerhalb des Brandschutzklappen- oder Brandschutzlaminat-Gehäuses bzw. -Gehäuseteils (20) bzw. des Gesamt- bzw. Kompakt-Gehäuses (50) sicht- und/oder hörbar anzeigenden Brandschutzklappen-Status-Indikator, insbesondere in Form eines dann aus dem Gehäuse bzw. Gehäuseteil (20, 30) des Gesamt- bzw. Kompakt-Gehäuses (50) herausragend ausfahrbaren oder dann innerhalb des genannten Gehäuses verschwindenden Indikatorstabes (38), eines durch die Desintegration des Schmelzsicherungselements (311) und/oder die Klapp-Bewegung der Klappenplatte (31) oder zumindest eines der Klappenflügel (310) um- oder einschaltbaren elektrischen Schalters (385) für die Betätigung eines außerhalb angeordneten Warn-Elements, insbesondere Warn-Leuchtelementes und/oder Warn-Tongenerators, einer durch einen Thermosensor, ein Bimetallelement oder eines durch die Bewegung eines Strominduktionselements bzw. Magneten in einer Elektro-Spule induzierten Stromstoßes aktivierten, außerhalb des Gehäuses (20, 30, 50) angeordneten Warneinheit, insbesondere Warn-Leuchtelements und/oder Warn-Tongenerators od. dgl. ausgestattet ist.

5. Brandschutz-Einrichtung nach einem der Ansprüche 1 bis 4, **dadurch gekennzeichnet, dass** das bzw. der Brandschutzmanschetten-Gehäuse bzw. -Gehäuseteil (20) als solches bzw. solcher oder in Form eines Erweiterungsteiles (501, 201) und das bzw. der Brandschutzklappen-Gehäuse bzw. -Gehäuseteil (30), bevorzugt in Form eines Stutzenteiles (502, 302) einstückig ineinander übergehend und gemeinsam ein Kompakt-Brandschutzgehäuse (50) bildend ausgebildet sind.

6. Brandschutz-Einrichtung nach Anspruch 1 bis 5, **dadurch gekennzeichnet, dass** der bzw. die Brandschutzlaminat-(Teil)körper (21, 21') und die Brandschutzklappen-Platte (31) bzw. deren Klappenplattenflügel (310) mit ihren Lagern (32) im Stutzenteil (502, 302) des, bevorzugt einstückig gefertigten, gemeinsamen Kompakt-Brandschutzgehäuses (50) angeordnet sind.

7. Brandschutzeinrichtung nach einem der Ansprüche 1 bis 6, **dadurch gekennzeichnet, dass** die Lager (32) der Brandschutzklappen-Flügel (31) im Gesamt- bzw. Kompakt-Brandschutzgehäuse (50) in einem solchen Abstand (al) zum bzw. zu den Brandschutzlaminat-(Teil)Körper(n) (21, 21') angeordnet sind, dass die Klappenplatte (31) bzw. die Klappenplattenflügel (310) im Ruhe- bzw. Nichtfunktions-Zustand (R) mit dem Zenit-Bereich (Z) ihres im wesentlichen runden bzw. kreisbogenförmigen Außenrandes (313) - im Fall eines einen (kreis)runden Innenquerschnittes (Qi) aufweisenden Kompaktgehäuses (50) - oder eines der mit ihren zur Lagerungs-Achse (as) parallel geradlinig verlaufenden Außenränder (313) - im Fall eines Rechteck- oder Quadrat-Innenquerschnitt (Qi) aufweisenden Gesamt- bzw. Kompaktgehäuses (50) - in den Innenraum innerhalb des im wesentlichen toroid-förmig hohlen Laminatkörpers (21) bzw. zwischen den beiden Laminat-Teilkörpern (21') hineinragen oder den- bzw. dieselben durchragen.

8. Brandschutzeinrichtung nach einem der Ansprüche 1 bis 7, **dadurch gekennzeichnet, dass** das Gesamt- bzw. Kompaktgehäuse (50) einen - sich an dessen Erweiterungsteil (501, 201) materialintegral anschließenden, im wesentlichen der jeweiligen Innen-Querschnittfläche (Qil) der an die Brandschutz-Einrichtung (100) angeschlossenen Luft- bzw. Abluftführungs-Rohrleitung (7, 70) entsprechende Innen-Querschnittsfläche (Qi) und einen weniger weiten und geringe Baulänge aufweisenden Stutzenteil (502, 202) aufweist, in bzw. an welchem die Brandschutz-Klappenplatte (31) bzw. die Klappenplattenflügel (310) gelagert sind.

9. Brandschutzeinrichtung nach einem der Ansprüche 1 bis 8, **dadurch gekennzeichnet, dass** das einstückige Gesamt- bzw. Kompaktgehäuse (50) oder aber das bzw. den Gehäuse bzw. Gehäuseteil (20) der Brandschutzmanschette (2) und/oder das bzw. der Gehäuse bzw. Gehäuseteil(30) der an dieselbe angeschlossenen bzw. mit ihr verbundenen Brandschutzklappe (3), bevorzugt durch Fließpressen, aus Stahlblech gefertigt ist.

10. Brandschutzeinrichtung nach einem der Ansprüche 1 bis 9,
**dadurch gekennzeichnet, dass** - im Falle eines einen (kreis)runden Innen-Querschnitt (Qi) aufweisenden Brandmanschetten-Gehäuses bzw. -Gehäuseteils (20) mit in demselben angeordnetem im Wesentlichen toroid-förmigen Brandschutz-Körper (21) - die Expansions-Führungselemente (4) durch zumindest drei, bevorzugt zumindest vier, bevorzugt in untereinander gleichen Winkel- bzw. Bogenabständen voneinander im bzw. am genannten Gehäuse bzw. Gehäuseteil (20) befestigten, von demselben radial zur Gehäuseachse (ga) nach innen hin ragenden und den Laminatkörper (21) bzw. die denselben bildenden Brandschutzlaminat-Lagen, bevorzugt mittig oder im Nahbereich von dessen bzw. deren Mittelebene (Em), durchsetzende, rigide, im Wesentlichen geradelinigen Verlauf aufweisende Laminat-Führungsstäbe, -stifte, -schäfte (41), - schienen oder aber -rohr (410) gebildet sind.

11. Brandschutzeinrichtung nach einem der Ansprüche 1 bis 10,
**dadurch gekennzeichnet,**
- **dass** die radial nach innen und aufeinander zuragenden Laminat-Führungsstäbe (41) in einem Abstand von der Gehäuseachse (ga), der bevorzugterweise maximal ein Fünftel des Gehäuse-Innenradius beträgt, frei endend ausgebildet sind, oder
- **dass** die radial nach innen zur Gehäuseachse (ga) hin ragenden Laminat-Führungsstäbe (41) bzw. deren freie Enden im Nahbereich der Gehäuseachse (ga), insbesondere durch Schweißung, materialschlüssig oder aber mittels eines Verbindungsstückes miteinander verbunden sind, oder
- **dass** anstelle von zwei zueinander diametral angeordneten, aufeinander zu ragenden Laminat-Führungsstiften (41) - jeweils nur ein durchgehender Führungsstift (41) vorgesehen ist, welcher mit seinen beiden Enden in einander diametral gegenüberliegenden Positionen im bzw. am Gehäuse bzw. Gehäuseteil (20) der Brandschutzmanschette (2) verankert bzw. befestigt ist, wobei es in diesem Fall bevorzugt ist, wenn die durchgehenden Laminat-Führungsstifte (41) od. dgl. jeweils in - zueinander im Wesentlichen um die Materialstärke (ms) der Führungsstifte (41) voneinander beabstandeten, zueinander parallelen, quer bzw. senkrecht zur Gehäuseachse (ga) Ebenen bzw. Radialebenen liegend angeordnet sind, oder aber
- **dass** alle durchgehenden Laminat-Führungsstifte (41) od. dgl. im Wesentlichen in ein und derselben Ebene bzw. Radialebene liegend bzw. verlaufend angeordnet sind, wobei einer der Stifte (41) od. dgl. durchgehend/geradlinig verläuft und die weiteren oder aber alle genannten Stifte im Nahbereich der Gehäuseachse (ga) mit Ausweich-Ausbuchtungen (413) ausgebildet sind, wobei es in diesem Fall bevorzugt ist, wenn die durchgehenden Laminat-Führungsstifte (41) od. dgl. im Bereich der Gehäuseachse (ga) - insbesondere durch Schweißung - materialschlüssig miteinander verbunden sind.

12. Brandschutzeinrichtung nach einem der Ansprüche 1 bis 11,
**dadurch gekennzeichnet, dass** - im Falle von im Wesentlichen Quadrat- bzw. Rechteck-Innenquerschnitt aufweisenden Brandschutzmanschetten (2) mit jeweils an zwei aneinander gegenüberliegenden Wänden (205) von deren Gehäuse bzw. Gehäuseteil (20) innenseitig anliegend angeordneten, im Wesentlichen streifen-, (flach-) quader oder (flach-)prismenförmigen Laminat-Teilkörpern (21') - die Laminat-Führungselemente (4) durch im bzw. am Gehäuse bzw. Gehäuseteil (20) der Brandschutzmanschette (2) bzw. an den genannten einander gegenüberliegenden Wänden (205) derselben befestigte, die beiden Laminat-Teilkörper (21') durchsetzende, im Abstand voneinander, bevorzugt zueinander parallel und im Wesentlichen senkrecht von den beiden aneinander gegenüberliegenden Wänden (205) des Gehäuses (20) weg, aufeinander zu ragenden, entweder im Abstand von der Gehäuse-Mittelebene (Me) frei endende, oder aber bevorzugter Weise jeweils miteinander einstückige, durchgehende Laminat-Führungsstifte, -stäbe (41), -schienen, oder aber -rohr (410) gebildet sind.

13. Brandschutzeinrichtung nach einem der Ansprüchen 1 bis 12,
**dadurch gekennzeichnet, dass** die Laminat-Führungsstifte (41) od. dgl. in das bzw. den Brandschutzmanschetten-Gehäuse bzw. -Gehäuseteil (20) eingeschraubt oder mittels von außen an demselben anliegend abgestützten Schraubmuttern (411) in Lage gehalten sind, wobei bevorzugterweise vorgesehen ist, dass die Laminat-Führungsstifte (41) od. dgl. durch - ein durchgehendes Gewinde - aufweisende Gewindestäbe oder -stangen gebildet sind.

14. Brandschutzeinrichtung nach einem der Ansprüche 1 bis 13,
**dadurch gekennzeichnet, dass** die, bevorzugt aus korrosionsfestem Stahl gefertigten, Laminat-Führungselemente (4) durch - den Laminatkörper (21) bzw. die Laminat-Teilkörper (21') beidseitig seitlich flankierend angeordnete Sätze bzw. Garnituren von in gleicher Weise wie die in den Ansprüchen 10 bis 13 beschriebenen Führungsstifte (41) od. dgl. ausgebildete und angeordnete, jedoch den bzw. die Laminatkörper (21) bzw. Laminat-Teilkörper (21') nicht durchsetzende - Führungsstäbe (41) oder aber durch durch - den Laminatkörper (21) bzw. die Laminat-Teilkörper (21') beidseitig seitlich flankierend angeordnete, mit ihrer Peripherie bzw. mit ihren Rändern zumindest bis an die Innenwandung des Brandschutzmanschetten-Gehäuses bzw. -Gehäuseteils (20) reichende und dort anliegend angeordnete, in bzw. an der genannten Innenwand befestigte, die für die strömende Luft bzw. Abluft zur Verfügung stehende Innen-Querschnittsfläche (Qi) des genannten Gehäuses bzw. Gehäuseteils (20) insgesamt nur wenig reduzierende - Führungs-Netze, -Gitter (41') oder-Lochplatten gebildet sind.

15. Brandschutzeinrichtung nach einem der Ansprüche 1 bis 14,
**dadurch gekennzeichnet, dass** die an das bzw. den Gehäuse bzw. Gehäuseteil (20) der Brandschutzmanschette (2) mit ihrem Gehäuse bzw. Gehäuseteil (30) unmittelbar anschließend angeordnete Brandschutzklappe (3) so ausgebildet ist, dass der Kreisbogenrand (313) der im Gehäuse (30) gelagerten Klappenplatte (31) bzw. Klappenplattenflügel (310) im Ruhe- bzw. Nicht-Funktionszustand (R) derselben in nur geringem Ausmaß, beispielsweise im Ausmaß von 3 bis 10 mm, von den LaminatFührungselementen (4, 41, 41') beabstandet ist.

16. Brandschutzeinrichtung nach einem der Ansprüche 1 bis 15,
**dadurch gekennzeichnet,**
**dass** die Brandschutzklappenflügel (310) von ihren im Ruhezustand (R) einander zugekehrten Flächen wegragende Haken od. dgl. Halteelemente aufweisen, in welche ein die beiden Flügel (310) in dieser Position haltender bzw. haltendes Schmelzsicherungs-Ring, -Joch od. dgl. aus einem leicht schmelzbaren Material, insbesondere Lotmetall od. dgl. oder aus mittels leicht schmelzbarem Material, insbesondere Metall, Lotmetall od. dgl. miteinander verbunden, im Brandfall desintegrierenden Joch-Teilen od. dgl. eingehängt ist, und dass die Ring- oder Joch-Ausnehmung von einer sich beidseitig, z.B. mittels Muttern (381), abstützenden Indikator-Stift (38) durchsetzt ist, welcher - die Wand des Klappen-Gehäuses (30) des Laminat-Gehäuses bzw. -Gehäuseteils (20) bzw. des Gesamt- bzw. Kompaktgehäuse (50) durchsetzend - aus demselben herausragend und beim Schmelzen oder Desintegrieren des Schmelzsicherungs-Rings, -Jochs (3) od. dgl. entweder durch Schwerkraftwirkung oder federkraft-unterstützt (382) in eine wesentlich mehr, also auffallend, ausragende Stellung oder aber in eine nicht mehr aus dem genannten Gehäuse bzw. Gehäuseteil (20) bzw. Kompakt-Gehäuse (50) ragende Stellung verbringbar ist.

17. Brandschutz-Einrichtung nach einem der Ansprüche 1 bis 15,
**dadurch gekennzeichnet,**
- **dass** die Schmelzsicherungseinheit (311) in gleicher Weise gebaut ist wie gemäß Anspruch 16 und
- **dass** mittels des Schmelzsicherungsjochs (311), -ringes od. dgl. die Schaltzunge, Mikrotaste od. dgl. eines Schalters bzw. Mikroschalters (385) niedergedrückt ist, welche beim Wegschmelzen bzw. bei Desintegration des Schmelzsicherungs-Joches, -ringes (311) od. dgl. im Brandfall die Schaltzunge bzw. der Mikrotaster od. dgl. des Schalters bzw. Mikroschalters (385) freigebbar und **dadurch** das Einschalten einer Warneinheit, insbesondere Warnlampe (386) und/oder Warn-Tongebers (387), bewirkbar ist.
